(19)

Europäisches Patentamt
European Patent Office
Office européen des brevets

(11) **EP 3 334 006 A1**

(12) **EUROPEAN PATENT APPLICATION**
published in accordance with Art. 153(4) EPC

(43) Date of publication:
**13.06.2018 Bulletin 2018/24**

(21) Application number: **16833300.3**

(22) Date of filing: **01.08.2016**

(51) Int Cl.:
**H02J 7/02** *(2016.01)*    **H02J 7/04** *(2006.01)*

(86) International application number:
**PCT/KR2016/008443**

(87) International publication number:
**WO 2017/023064 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2015 KR 20150109945**

(71) Applicant: **LG Innotek Co., Ltd.**
**Seoul, 04637 (KR)**

(72) Inventor: **BAE, Su Ho**
**Seoul 04637 (KR)**

(74) Representative: **DREISS Patentanwälte PartG mbB**
**Friedrichstrasse 6**
**70174 Stuttgart (DE)**

(54) **WIRELESS POWER TRANSMISSION SYSTEM, AND OPERATION METHOD THEREFOR**

(57)    The present invention provides a method of driving a wireless power transfer system including a power transfer unit and a plurality of power receiver units. The power transfer unit receives a parameter including information about output voltages of AC/DC converters of the power receiver units and output power of the power receiver units and creates power receiver unit control information including an optimum output control voltage on the basis of the parameter. Further, at least one of the power receive units adjusts an output voltage of a AC/DC converter thereof on the basis the optimum output control voltage.

[fig. 5]

**Description**

## TECHNICAL FIELD

The present invention relates to a wireless power transfer system and a method of driving the wireless power transfer system.

## BACKGROUND ART

In genera, various electronic devices are equipped with a battery and use the power stored in the battery. The batteries of electronic devices can be replaced and can also be recharged. To this end, electronic devices have a contact terminal for connecting an external charger. That is, electronic devices are electrically connected with a charger through the contact terminal. However, since the contact terminals of electronic device are exposed to the outside, they may be contaminated by dirt or a short circuit may occur due to humidity. In these cases, there is a problem that the batteries of electronic devices are not charged due to poor contact between a contact terminal and a charger.

In order to solve this problem, wire power transfer (WPT) has been proposed to wirelessly charge electronic devices.

Wireless power transfer, which is a technology of transferring power through a space without a wire, is a technology that maximizes convenience in supplying power to mobile devices and digital appliances.

A wireless power transfer system has advantages such as saving energy by controlling power consumption in real time, overcoming a spatial limit in power supply, and reducing the amount of waste of batteries by recharging batteries.

A magnetic induction method and a magnetic resonance method are representative of methods of implementing a wireless power transfer system. The magnetic induction method is a non-contact energy transfer technology that supplies a current to one of two coils disposed close to each other to generate magnetic flux, thereby generating an electromotive force at the other coil, and can use frequencies of hundreds of kHz. The magnetic resonance method, which is a technology that uses only an electric field or a magnetic field without using electromagnetic waves or a current, has over several meters of available power transfer distance and can use bands of several MHz.

A wireless power transfer system includes a transmitter that wirelessly transfers power and a receiver that receives power and charges loads such as a battery. A charge method by receivers, that is, any one of the magnetic induction method and the magnetic resonance method can be selected and transmitters that can wirelessly transfer power in correspondence to the charge methods by receivers have been developed.

When several receivers are simultaneously charged using one transmitter, the receivers receive power through the same magnetic field generated by the transmitter, so the operation of the entire system becomes unstable. For example, assuming that two receivers A and B that have the same power transfer efficiency wirelessly receive power, when the receiver A receives appropriate power, the receiver B may not receive sufficient power. In this case, if the output power of a transmitter is increased to supplement the insufficient reception power, the receiver A receives excessive power. Further, if the output power of the transmitter is decreased due to the excessive power reception of the receiver A, the receiver B cannot receive sufficient power and this is repeated, so the operation of the entire system becomes unstable.

## DISCLOSURE

## TECHNICAL PROBLEM

An embodiment can provide a wireless power transfer system that can secure system stability in multi-charging and can improve power transfer efficiency of the entire system, and a method of driving the wireless power transfer system.

## TECHNICAL SOLUTION

An embodiment provides a method of driving a power transfer unit transferring wireless charge power to a plurality of power receiver units, in which the power transfer unit receives a parameter including information about output voltages of AC/DC converters of the power receiver units and output power of the power receiver units and creates power receiver unit control information including an optimum output control voltage on the basis of the parameter; and the power receiver unit control information is transmitted to at least one of the power receiver units, and the power receiver unit receiving the power receiver unit control information receives information about a requested voltage generated on the basis of the optimum output control voltage and generates wireless power on the basis of the information about the requested voltage.

An embodiment provides a method of driving a power transfer unit, in which information about the parameter and the requested voltage includes information about at least one of a maximum output voltage that is a maximum value, a minimum output voltage that is a minimum value, and an optimum output voltage that is an optimum value of the output voltage.

An embodiment provides a method of driving a power transfer unit, in which the power receiver unit control information further includes information for enabling/disabling and permitting charge.

An embodiment provides a method of driving a power transfer unit, in which the power receiver units include first and second power receiver units, and the power transfer unit generates first and second optimum output control voltages for the first and second power receiver units on the basis of first output power and a first output voltage of a first AC/DC converter of the first power receiver unit and second output power and a second output voltage of a second AC/DC converter of the second power receiver unit.

An embodiment provides a method of driving a power transfer unit, in which the power transfer unit determines whether the relationship between the first and second output power and the first and second output voltages satisfies the following equation 1,

Equation 1

$$V_{rect2} = V_{rect1}{}^{2} \frac{P_{rx2}}{P_{rx1}}$$

where $P_{rx1}$ is the first output power, $P_{rx2}$ is the second output power, $V_{rect1}$ is the first output voltage, and $V_{rect2}$ is the second output voltage.

An embodiment provides a method of driving a power transfer unit, in which a first output control voltage satisfying the equation 1 is set within a range between a maximum value and a minimum value of the first output voltage and first power receiver unit control information including information about the first output control voltage to the first power receiver unit, and a first requested voltage generated on the basis of the first power receiver unit control information by the first power receiver unit and wireless power is generated on the basis of the first requested voltage.

An embodiment provides a method of driving a power transfer unit, in which a second output control voltage satisfying the equation 1 is set within a range between a maximum value and a minimum value of the second output voltage and second power receiver unit control information including information about the second output control voltage to the second power receiver unit, and a second requested voltage generated on the basis of the second power receiver unit control information by the second power receiver unit and wireless power is generated on the basis of the second requested voltage.

An embodiment provides a method of driving a power transfer unit, in which when there is no first output control voltage satisfying the equation 1 within a range between the maximum value and the minimum value of the first output voltage or when there is no second output control voltage satisfying the equation 1 within the maximum value and the minimum value of the second output voltage, the first output control voltage is set as any one of the maximum value and the minimum value of the first output voltage, and the second output control voltage is set as any one of the maximum value and the minimum value of the second output voltage.

An embodiment provides a method of driving a power transfer unit, in which when the first output power is larger than the second output power, the first output control voltage is set as the maximum value of the first output voltage and the second output control voltage is set as the minimum value of the second output voltage.

An embodiment provides a method of driving a power transfer unit, in which when the first output voltage is smaller than the second output voltage, the first output control voltage is set as the minimum value of the first output voltage and the second output control voltage is set as the maximum value of the second output voltage.

An embodiment provides a wireless power transfer method of a wireless power transfer unit transferring wireless power to a plurality of wireless power receiver units, the method including: receiving first reception power information of the power receiver units; determining an optimum output control voltage of the power receiver units; and transmitting power adjusted on the basis of the optimum output control voltage to the power receiver units.

An embodiment provides a wireless power transfer method, the method further including: transmitting power receiver unit control information of the power receiver units to the power receiver units; receiving second reception power information from the power receiver units; and transmitting power adjusted on the basis of the second reception power information to the power receiver units.

An embodiment provides a wireless power transfer method, in which the reception power information includes information about at least one of output voltages of AC/DC converters of the power receiver units, a maximum output voltage that is a maximum value, a minimum output voltage that is a minimum value, and an optimum output voltage that is an optimum value of the output voltage.

An embodiment provides a wireless power transfer method, in which the power receiver unit control information includes the optimum output control voltage, and the second reception power information is determined on the basis of the optimum output control voltage.

An embodiment provides a wireless power transfer method, in which the power receiver unit control information includes at least one of items of information for enabling/disabling and permitting charge.

An embodiment provides a wireless power transfer method, in which the optimum output control voltages of the power receiver units are determined using output voltage values of the AC/DC converters of the power receiver units.

An embodiment provides a wireless power transfer method, in which the optimum output control voltages of the power receiver units include the first output voltage $V_{rect1}$ or the second output voltage $V_{rect2}$ that satisfies the following equation 1,

Equation 1

$$V_{rect2} = V_{rect1}{}^2 \frac{P_{rx2}}{P_{rx1}}$$

where $P_{rx1}$ and $P_{rx2}$ are output power values of the AC/DC converters of the power receiver units.

An embodiment provides a wireless power transfer method, in which when the optimum output control voltages of the power receiver units are not included in a range between a maximum output voltage and a minimum output voltage included in the first reception power information of the power receiver units, the optimum output control voltages of the power receiver units are determined as the maximum output voltage or the minimum output voltage.

An embodiment provides a wireless power reception method of a wireless power receiver unit receiving wireless power from a wireless power transfer unit, the method including: transmitting first reception power information to the power transfer unit; receiving power receiver unit control information from the power transfer unit; determining second reception power information on the basis of the power receiver unit control information; transmitting the second reception power information to the power transfer unit; and receiving wireless power adjusted on the basis of the second reception power information from the power transfer unit.

An embodiment provides a wireless power reception method, in which the reception power information includes information about at least one of output voltages of AC/DC converters of the power receiver units, a maximum output voltage that is a maximum value, a minimum output voltage that is a minimum value, and an optimum output voltage that is an optimum value of the output voltage.

An embodiment provides a wireless power reception method, in which the power receiver unit control information includes the optimum output control voltage, and the second reception power information is determined on the basis of the optimum output control voltage.

An embodiment provides a wireless power reception method, in which the first power receiver unit control information includes at least one of items of information for enabling/disabling and permitting charge.

An embodiment provides a wireless power reception method, in which the power transfer unit provides wireless power to a separate power receiver unit that is discriminated from the power receiver unit, and an optimum output control voltage of the power receiver unit is determined, using an output voltage value of an AC/DC converter of the power receiver unit and an output voltage value of an AC/DC converter of the separate power receiver unit.

An embodiment provides a wireless power reception method, in which optimum output control voltages of the power receiver unit and the separate power receiver unit include the first output voltage $V_{rect1}$ or the second output voltage $V_{rect2}$ that satisfies the following equation 1,

Equation 1

$$V_{rect2} = V_{rect1}{}^2 \frac{P_{rx2}}{P_{rx1}}$$

where $P_{rx1}$ and $P_{rx2}$ are output power values of the AC/DC converters of the power receiver unit and the separate power receiver units.

An embodiment provides a wireless power reception method, in which the optimum output control voltages of the power receiver unit and the separate power receiver unit are not included in range between a maximum output voltage and a minimum output voltage included in the first reception power information of the power receiver unit and the separate power receiver unit, the optimum output control voltages of the power receiver unit and the separate power receiver unit are set as the maximum output voltage or the minimum output voltage.

An embodiment provides a method of driving a first power receiver unit of first and second power receiver units receiving wireless charge power from a power transfer unit, in which the first power receiver unit transmits a parameter including information about a first output voltage and first output power of a first AC/DC converter thereof to the power transfer unit, receives power receiver unit control information including a first optimum output control voltage generated on the basis of the parameter from the power transfer unit, and creates and transmits a requested voltage on the basis of the first optimum output control voltage to the power transfer unit.

An embodiment provides a method of driving a first power receiver unit, in which information about the parameter and the requested voltage includes information about at least one of a first maximum output voltage that is a maximum value, a first minimum output voltage that is a minimum value, and a first optimum output voltage that is an optimum value of the first output voltage.

An embodiment provides a method of driving a first power receiver unit, in which the power receiver unit control information further includes information for enabling/disabling and permitting charge.

An embodiment provides a method of driving a first power receiver unit, in which the power transfer unit generates first and second optimum output control voltages for the first and second power receiver units on the basis of first output power and a first output voltage of a first AC/DC converter of the first power receiver unit and second output power and a second output voltage of a second AC/DC converter of the second power receiver unit.

An embodiment provides a method of driving a first power receiver unit, in which the power transfer unit determines whether the relationship between the first and second output power and the first and second output voltages satisfies the following equation 1,

Equation 1

$$V_{rect2} = V_{rect1}^{2}\, \frac{P_{rx2}}{P_{rx1}}$$

where $P_{rx1}$ is the first output power, $P_{rx2}$ is the second output power, $V_{rect1}$ is the first output voltage, and $V_{rect2}$ is the second output voltage.

An embodiment provides a method of driving a first power receiver unit, in which a first output control voltage satisfying the equation 1 is set within a range between the maximum value and the minimum value of he first output voltage, and power receiver unit control information including information about the first output control voltage is received and a first requested voltage is generated on the basis of the power receiver unit control information.

An embodiment provides a method of driving a first power receiver unit, in which when there is no first output control voltage satisfying the equation 1 within a range between the maximum value and the minimum value of the first output voltage or when there is no second output control voltage satisfying the equation 1 within the maximum value and the minimum value of the second output voltage, the first output control voltage is set as any one of the maximum value and the minimum value of the first output voltage.

An embodiment provides a method of driving a first power receiver unit, in which when the first output power is larger than the second output power, the first output control voltage is set as the maximum value of the first output voltage, and when the first output power is smaller than the second output power, the first output control voltage is set as the minimum value of the first output voltage.

An embodiment provides a power transfer unit including: a transfer-side resonant circuit resonantly coupled to reception-side resonant circuits of a plurality of power receiver units; a power converter generating and outputting AC power to the transfer-side resonant circuit; and a controller controlling the power converters, in which the power transfer unit generates and transfers the an optimum rectified control voltage on the basis of minimum and maximum values of rectified voltages of the power receiver units, and generates wireless power on the basis of requested voltages of the power receiver units generated on the basis of the optimum rectified control voltage.

An embodiment provides a power transfer unit, in which the power transfer unit receives first output power of a first power receiver unit that is any one of the power receiver units and second output power of a second power receiver that is another one of the power receiver units and then sets the optimum rectified control voltage on the basis of the first and second output power.

An embodiment provides a power transfer unit, in which when the first output power is smaller than the second output power, the optimum rectified control voltage is generated such that a requested voltage of the first power receiver unit is smaller than a requested voltage of the second power receiver unit.

An embodiment provides a power transfer unit, in which when the first output power is smaller than the second output power and the optimum rectified control voltage, which is generated such that a requested voltage of the first power receiver unit is smaller than a requested voltage of the second power receiver unit, cannot be set within a range between a minimum value and a maximum value of the rectified voltage, the rectified control voltage is set such that the requested voltage of the first power receiver unit becomes a minimum value of a rectified voltage of the first power receiver unit and the requested voltage of the second power receiver unit becomes a maximum value of a rectified voltage of the second power receiver unit.

An embodiment provides a power transfer unit, in which information of the rectified control voltage is transmitted to the power receiver units together with power receiver control information enabling or disabling a charge function of the power receiver units.

An embodiment provides a power receiver unit including: a reception-side resonant circuit resonantly coupled to a transfer-side resonant circuit of a power transfer unit; a rectifier rectifying an AC current from the reception-side resonant circuit; and a controller controlling a rectified voltage of the rectifier, in which the power receiver unit transmits information about the rectified voltage to the power transfer unit, receives a rectified control voltage generated on the basis of the information about the rectified voltage from the power transfer unit, and generates and transmits a requested voltage to the power transfer unit on the basis of the rectified control voltage.

An embodiment provides a power receiver unit, in which the rectified control voltage is a voltage value of any one of a minimum value to a maximum value of the rectified voltage.

An embodiment provides a power receiver unit, in which wireless power generated on the basis of the requested voltage is received.

An embodiment provides a power receiver unit, in which information of the rectified control voltage is transmitted to the power receiver units together with power receiver control information enabling or disabling a charge function of the power receiver units.

## ADVANTAGEOUS EFFECTS

According to embodiments, it is possible to provide a wireless power transfer system and a driving method thereof, which an remove instability of a system caused by considering only the power efficiency of any one power receiver unit, when charge power is adjusted at all times on the basis of power receiver unit dynamic parameters from a plurality of power receiver units.

According to embodiments, since wireless charge is performed in consideration of charge efficiency that is the most suitable for the entire system when a plurality of power receiver units is simultaneously charged, it is possible to secure efficiency and stability in multi-charge.

According to embodiments, it is possible to secure stability in multi-charge by readjusting the optimum output voltages of the reception-side AC/DC converters of a plurality of power receiver units.

## BRIEF DESCRIPTION OF THE DRAWINGS

FIG. 1 is diagram showing a magnetic induction equivalent circuit;

FIG. 2 is diagram showing a magnetic resonance equivalent circuit;

FIGS. 3A and 3B are block diagrams showing a power transfer unit that is one of sub-systems constituting a wireless power transfer system;

FIGS. 4A and 4B are block diagrams showing a power receiver unit that is one of sub-systems constituting a wireless power transfer system;

FIG. 5 is a diagram showing the operation flow of a wireless power transfer system;

FIG. 6A is a diagram showing a power transfer unit and first and second power receiver units that receive wireless power from the power transfer unit;

FIG. 6B is a diagram showing an equivalent circuit of the power transfer unit and the first and second power receiver units;

FIG. 7 is a diagram showing the operation flow of a power transfer unit;

FIG. 8 is a diagram showing the operation flow of a power receiver unit;

FIG. 9 is a diagram showing the operation flow of a power transfer unit and first and second power receiver units;

FIG. 10 is a flowchart showing the operation of a power transfer unit corresponding to FIG. 9;

FIG. 11 is a diagram showing the operation flow of a power transfer unit and first and second power receiver units; and

FIG. 12 is a flowchart showing the operation of a power transfer unit corresponding to FIG. 11.

## BEST MODE FOR THE INVENTION

A wireless power transfer system including a power transfer unit having a function of wirelessly transmitting power and a power receiver unit wirelessly receiving power according to an embodiment of the present invention is described hereafter in detail with reference to the drawings. Embodiments to be described hereafter are provided as examples for sufficiently communicating the spirit of the present invention to those skilled in the art. Accordingly, the present invention is not limited to the following embodiments and may be implemented by other ways. The sizes, thicknesses, etc. of devices may be exaggerated for convenience in the drawings. Like reference numerals indicate substantially the like components throughout the specification.

Embodiments may include a communication system that selectively uses various frequency bands from a low frequency (50kHz) to a high frequency (15MHz) to wirelessly transfer power and can exchange data and control signals for system control.

Embodiments can be applied to various industrial fields such as a mobile terminal industry using electronic devices, which use or require a battery, a smart watch industry, a computer and notebook industry, an appliance industry, an electric vehicle industry, a medical device industry, and a robot industry.

Embodiments may consider a system that can transfer power to one or more devices, using one or more transfer coils.

According to embodiments, it is possible to the problem of a deficit of power in a battery for mobile devices such as a smartphone and a notebook, and for example, when a smartphone and a notebook are used on a wireless charger pad on a table, batteries are automatically charged and can be used for a long time. Further, it is possible to charge and use various mobile devices regardless of charging terminals that are different by mobile device manufacturers only by installing a wireless charger pad in public places such as a cafe, an airport, a taxi, an office, and a restaurant. Further, when a wireless power transfer technology is applied to home appliances such as a cleaner and an electric fan, it is not required to look for a power cable, disarranged electric wires cannot be cleared in houses, electric wires in building can be reduced, and spatial availability can be increased. Further, at present, it takes long time to charge an electric vehicle with the electricity for home use, but if high power is transmitted by a wireless power transfer technology, the charging time can be reduced. Furthermore, if a wireless charging facility is installed on the floor of a parking place, it is possible to clear up the inconvenience that there is a need for preparing a power cable around an electric vehicle.

Terminologies and abbreviations that are used in embodiments are as follows.

Wireless power transfer system: A system that provides wireless power transfer in a magnetic field area.

Wireless power transfer system-charger; Power transfer unit (PTU) : A device that provides wireless power transfer to a power receiver unit in a magnetic field area and it may be referred to a transfer device or a transmitter.

Wireless power receiver system-device; Power receiver unit (PRU): A device that receives wireless power transfer from a power transfer unit in a magnetic field area and it may be referred to as a reception device or a receiver.

Charging area: An area where wireless power transfer is performed in a magnetic field area and it may change in accordance with the sizes of application products, requested power, and an operation frequency.

S scattering parameter: A ratio of an output voltage to an input voltage in frequency distribution and it may be a ratio of an output port to an input port (transmission; $S_{21}$), or a reflection value of each of input/output ports, that is, an output value (reflection; $S_{11}$, $S_{22}$) that is reflected back by its input.

Quality factor (Q): Q in resonance is a quality of frequency selection, the higher the Q, the better the resonance characteristic, and Q may be expressed as a ratio of energy kept in a resonator and lost energy.

The principle of wirelessly transferring power may be classified into a magnetic induction method and a magnetic resonance method.

The magnetic induction method is a non-contact energy transfer technology that puts a source inductor $L_s$ and a load inductor $L_\ell$ and supplies a current to the source inductor $L_s$ to generate magnetic flux, thereby generating an electromotive force at the load inductor $L_\ell$. The magnetic resonance method is a technology that wirelessly transfers energy using a resonance scheme in which two resonators are coupled and magnetic resonance is generated by a natural frequency between the resonators, so the resonators are vibrated at the same frequency, thereby generating an electric field and a magnetic field within the same wavelength range.

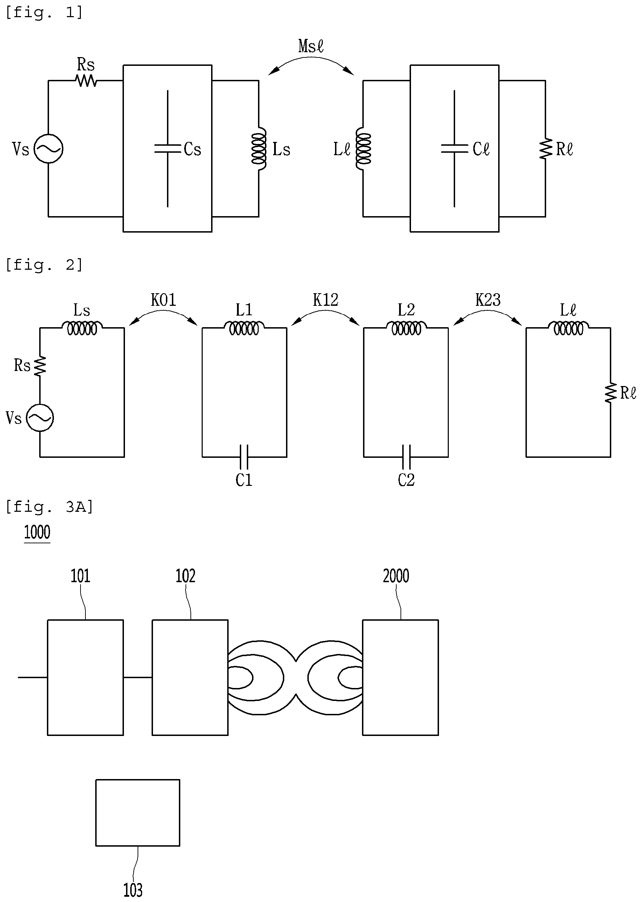

FIG. 1 is diagram showing a magnetic induction equivalent circuit.

Referring to FIG. 1, in the magnetic induction equivalent circuit, a power transfer unit may be implemented by a source voltage $V_s$ and a source resistor $R_s$ according to a device that supplies power, a source capacitor $C_s$ for impedance matching, and a source coil $L_s$ for magnetic coupling with a power receiver unit, and the power receiver unit may be implemented by a load resistor $R_\ell$ that is an equivalent resistor, a load capacitor $C_\ell$ for impedance matching, and a load coil $L_\ell$ for magnetic coupling with the power transfer unit, in which the degree of magnetic coupling of the source coil $L_s$ and the load coil $L_\ell$ can be expressed as mutual inductance $M_{s\ell}$.

When a ratio $S_{21}$ of an output voltage to an input voltage is obtained from a magnetic induction equivalent circuit composed of only coils without a source capacitor $C_s$ and a load capacitor $C_\ell$ for impedance matching and the maximum power transfer condition is found from the ratio, the maximum power transfer condition satisfies the following Equation 1.

$$\text{Equation 1}$$

$$L_s/R_s = L_\ell/R_\ell$$

When a ratio of the inductance of the transfer coil $L_s$ and the source resistor $R_s$ and a ratio of the inductance of the load coil $L_\ell$ and the load resistor $R_\ell$ are the same in Equation 1, the maximum power transfer is possible. In a system having only inductance, there is no capacitor that can compensate for reactance, so the reflection value $S_{11}$ of an I/O port cannot be 0 at the pint where the maximum power is transmitted, and the power transmission efficiency can be largely changed in accordance with mutual inductance $M_{s\ell}$. Accordingly, a source capacitor $C_s$ may be added to a power transfer unit as a compensation capacitor for impedance matching and a load capacitor Cl may be added to the power receiver unit. The compensation capacitors $C_s$ and $C_\ell$, for example, may be connected in series or in parallel to a reception coil $L_s$ and a load coil $L_\ell$, respectively. Further, not only the compensation capacitors, but passive devices such as additional capacitors and inductors may be further added to the power receiver unit and the power transfer unit for impedance matching.

FIG. 2 is diagram showing a magnetic resonance equivalent circuit.

Referring to FIG. 2, in the magnetic resonance equivalent circuit, the power transfer unit is implemented by a source coil forming a closed circuit by connecting a source voltage $V_s$, a source resistor $R_s$, and a source inductor $L_s$ in series, and a transfer-side resonant coil forming a closed circuit by connecting a transfer-side resonant inductor $L_1$ and a transfer-side resonant capacitor $C_1$ in series. Further, a power receiver unit is implemented by a load coil forming a closed circuit by connecting a load resistor $R_\ell$ and a load inductor $L_\ell$ and a reception-side resonant coil forming a closed circuit by connecting a reception-side resonant inductor $L_2$ and a reception-side resonant capacitor $C_2$ in series. Further, the source inductor $L_s$ and the transfer-side resonant inductor $L_1$ are magnetically coupled with a coupling coefficient $K_{01}$, the load inductor $L_\ell$ and the load-side resonant inductor $L_2$ are magnetically coupled with a coupling coefficient $K_{23}$, and the reception-side resonant inductor $L_1$ and the reception-side resonant inductor $L_2$ are magnetically coupled with a coupling coefficient $K_{12}$. An equivalent circuit according to another embodiment may be composed of only a transfer-side resonant coil and a reception-side resonant coil without a source coil and/or a load coil.

According to the magnetic induction method, when the resonant frequencies of two resonator are the same, most of the energy of the resonator of a power transfer unit is transmitted to the resonator of the power receiver unit, so the power transmission efficiency can be improved, and the efficiency in the magnetic resonance method is improved when the following Equation 2 is satisfied.

$$\text{Equation 2}$$

$$k/\Gamma \gg 1 \ (k \text{ is a coupling coefficient and } \Gamma \text{ is a damping rate})$$

In the magnetic resonance method, a device for impedance matching may be added to increase the efficiency and the impedance matching device may be a passive device such as an inductor and a capacitor.

A wireless power transfer system for transmitting power, using the magnetic induction method or the magnetic resonance method, on the basis of the wireless power transfer principle described above is described hereafter.

<Power transfer unit>

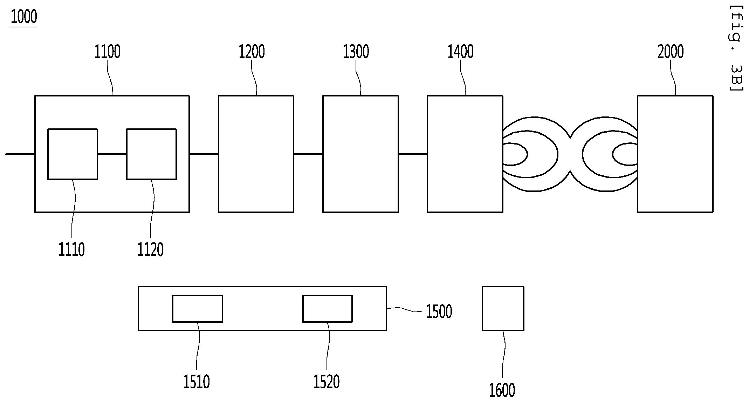

FIGS. 3A and 3B are block diagrams showing a power transfer unit that is one of sub-systems constituting a wireless power transfer system.

Referring to FIG. 3A, a wireless power transfer system according to an embodiment may include a power transfer unit 1000 and a power receiver unit 2000 that wirelessly receives power from the power transfer unit 1000. The power transfer unit 1000 may include: a power converter 101 that outputs an AC signal by performing power conversion on an input AC signal; a resonant circuit unit 102 that provides power to the power receiver unit 2000 in a charging area by generating a magnetic field on the basis of the AC signal output from the power converter 101; a controller 103 that controls power conversion of the power converter 101, adjusts the amplitude and frequency of the output signal from the power converter 101, performs impedance matching of the resonant circuit unit 102, senses impedance, voltage, and current information from the power converter 101 and the resonant circuit unit 102, and can perform wireless communication with the power receiver unit 2000. The power converter 101 may include at least one of a power converter that converts an AC signal into a DC signal, a power converter that outputs a DC by varying the level of a DC, and a power converter that converts a DC into an AC. The resonant circuit unit 102 may include a coil and an impedance matching unit that can resonate with the coil. The controller 103 may include a sensing unit for sensing impedance, voltage, and current information, and a wireless communication unit.

In detail, referring to FIG. 3, the power transfer unit 1000 may include a transfer-side AC/DC converter 1100, a transfer-side DC/AC converter 1200, a transfer-side impedance matching unit 1300, a transfer coil unit 1400, and a transfer-side communication & control unit 1500.

The transfer-side AC/DC converter 1100, which is a power converter that converts an AC signal provided from the outside into a DC signal under control of the transfer-side communication & control unit 1500, may include a rectifier 1110 and a transfer-side DC/DC converter 1120 that are sub-systems. The rectifier 1110, which is a system that converts a provided AC signal into a DC signal, for example, may be a diode rectifier that has relatively high efficiency in high-frequency operation, a synchronous rectifier that can be implemented into one chip, or a hybrid rectifier that can save the manufacturing cost and a space and has high degree of freedom of dead time. However, the rectifier is not limited thereto and any system that converts an AC into a DC can be applied. The transfer-side DC/DC converter 1120, which adjusts the level of a DC signal provided from the rectifier 1110 under control of the transfer-side communication & control unit 1500, for example, may be a buck converter that decreases the level of an input signal, a boost converter that increases the level of an input signal, or a buck boost converter or a cuk converter that deceases or increases the level of an input signal. The transfer-side DC/DC converter 1120 may include: an inductor and a capacitor that function as a switch device and a power conversion medium, which perform power conversion control function, or that perform a power smoothing function; and a transformer that adjusts a voltage gain or performs an electrical separation function (insulating function). Further, the transfer-side DC/DC converter 1120 can remove a ripple component or a pulsation component included in an input AC signal (an AC component included in a DC signal). The difference between a command value of an output signal of the transfer-side DC/DC converter 1120 and the actual output value can be adjusted through feedback, which may be achieved by the transfer-side communication & control unit 1500.

The transfer-side DC/AC converter 1200, which is a system that can convert a DC signal output from the transfer-side AC/DC converter 1100 into an AC signal and can adjust the frequency of the converted AC signal under control of the transfer-side communication & control unit 1500, for example, may be a half bridge inverter or a full bridge inverter. The wireless power transfer system may include various amplifiers that convert a DC into an AC, and for example, there are A-class, B-class, AB-class, C-class, E-class, and F-class amplifiers. The transfer-side DC/AC converter 1200 may include an oscillator that generates a frequency of an output signal and a power amplifier that amplifies an output signal.

The transfer-side AC/DC converter 1100 and the transfer-side DC/AC converter 1200 may be replaced by an AC power supplier, or may be removed or replaced by other components.

The transfer-side impedance matching unit 1300 improves flow of a signal by minimizing a reflected wave at points having different impedances. The two coils of the power transfer unit 1000 and the power receiver unit 2000 are spatially separated, so there is a lot of leakage of magnetic field, so it is possible to improve power transmission efficiency by correcting the impedance difference between two connection terminals of the power transfer unit 1000 and the power receiver unit 2000. The transfer-side impedance matching unit 1300 may be composed of at least one of an inductor, a capacitor, and a resistor and can adjust an impedance value for impedance matching by varying inductance of the inductor, capacitance of the capacitor, and a resistance value of the resistor under control by the communication & control unit 1500. When the wireless power transfer system transfers power, using the magnetic induction method, the transfer-side impedance matching unit 1300 may have a serial constant structure of a parallel resonant structure, and it is possible to minimize a loss of energy by increasing the induction coupling coefficient between the power transfer unit 1000 and the power receiver unit 2000. When the wireless power transfer system transfers power, using the magnetic resonance method, the transfer-side impedance matching unit 1300 can correct in real time impedance matching according to a matching impedance change on an energy transfer line when the distance between the power transfer unit 1000 and the power receiver unit 200 is changed or the characteristics of a coil is changed by metallic foreign objects (FO) or interaction of a plurality of device, in which as the correcting method, multi-matching that uses a capacitor, matching that uses multi-antennas, and matching that uses multi-loops, etc. may be used.

The transfer-side coil 1400 may be implemented by a plurality of coils or one coil, and when a plurality of transfer-side coils 1400 is provided, they may be spaced from each other or overlap each other. Further, when the transfer-side coils overlap each other, the overlap areas may be determined in consideration of a difference in magnetic flux. When the transfer-side coil 1400 is manufactured, internal resistance and radiation resistance, and in this case, when the resistance component is small, the quality factor and the transfer efficiency can be increased.

The communication & control unit 150 may include a transfer-side controller 1510 and a transfer-side communication unit 1520. The transfer-side controller 1510 can adjust an output voltage of the transfer-side AC/DC converter 1100 (or the current flowing through a transfer coil $I_{tx\_coil}$) in consideration of one or more of a requested amount of power of the power receiver unit 2000, the current changing amount, a voltage $V_{rect}$ at the output terminal of the rectifier of the power receiver unit, charging efficiency of each of a plurality of power receiver units, and a wireless power method. Further, it is possible to create a frequency and switching waves for driving the transfer-side DC/AC converter 1200 and control power to be transferred, in consideration of the maximum power transfer efficiency. Further, it is possible to control the entire operation of the power receiver unit 2000, using an algorithm, a program, or an application that is required to control and read out from a storage unit (not shown) of the power receiver unit 2000. The transfer-side controller 1510 may be referred to as a microprocessor, a micro control unit, or a micom. The transfer-side communication unit 1520 can communicate with a reception-side communication unit 2620 and may use a near field communication method such as Bluetooth, NFC, and Zigbee. The transfer-side communication unit 1520 and the reception-side communication unit 2620 can transmit and receive charge situation information, charge control instructions to and from each other. The charge situation information may include the number of the power receiver units 2000, a battery level, the number of times of charging, a battery capacity, a batter ratio, the power transfer amount of the power receiver unit 1000, etc. The transfer-side communication unit 1520 can receive a charge function control signal for controlling a charge function of the power receiver unit 2000 and the charge function control signal may be a control signal that enables or disables the charge function by controlling the power receiver unit 2000.

The transfer-side communication unit 1520 may perform communication in an out-of-band type configured in a separate module, but it is not limited thereto and may perform communication in an in-band type in which a power receiver unit uses a feedback signal that is transmitted to a power transfer unit, using a power signal transmitted from the power transfer unit and the power transfer unit transmits a signal to the power receiving unit, using frequency shift of the power signal transmitted from the power transfer unit. For example, a power receiver unit may transmit information such as start of charge, end of charge, and a battery state to a transmitter through a feedback signal by modulating the feedback signal. The transfer-side communication unit 1520 may be configured separately from the transfer-side controller 1510 and the reception-side communication unit of the power receiver unit 2000 may be included in a controller 2610 of the power receiver unit or may be separately configured.

A power transfer unit 1000 of a wireless power transfer system according to another embodiment may further include a detector 1600.

The detector 1600 can detect at least one of an input signal of the transfer-side AC/DC converter 1100, an output signal of the transfer-side AC/DC converter 1100, an input signal of the transfer-side DC/AC converter 1200, an output signal of the transfer-side DC/AC converter 1200, an input signal of the transfer-side impedance matching unit 1300, an output signal of the transfer-side impedance matching unit 1300, an input signal of the transfer-side coil 1400, and an output signal of the transfer-side coil 1400. For example, the signals may include at least one of information about a current, information about a voltage, and information about impedance. Detected signals are fed back to the communication & control unit 1500 and the communication & control unit 1500 can control the transfer-side AC/DC converter 1100, transfer-side DC/DC converter 1120, and transfer-side impedance matching unit 1300 on the basis of the feedback. The communication & control unit 1500 can perform foreign object detection (FOD) on the basis of the detection result. The detected signal may be at least one of a voltage and a current. The detector 1600 may be configured as hardware different from the communication & control unit 1500 or may be implemented as one piece of hardware.

<Power receiver unit>

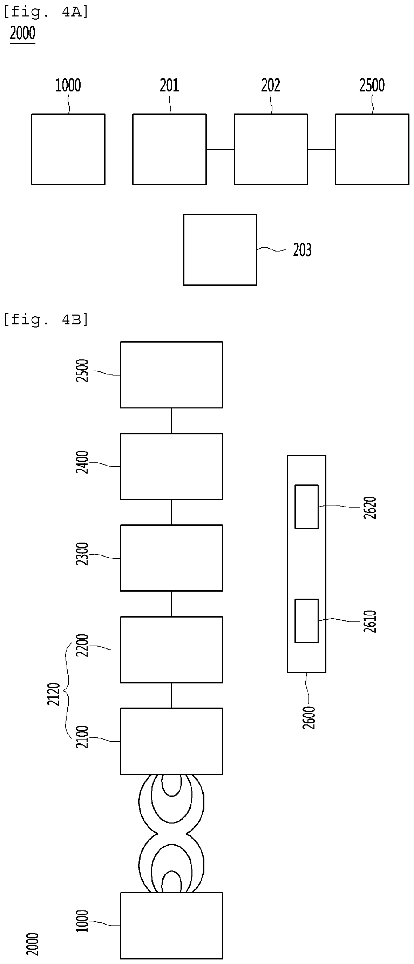

FIGS. 4A and 4B are block diagrams showing a power receiver unit (or a receiver) that is one of sub-systems constituting a wireless power transfer system.

Referring to FIG. 4A, a wireless power transfer system according to an embodiment may include a power transfer unit 1000 and a power receiver unit 2000 that wirelessly receives power from the power transfer unit 1000. The power transfer unit 2000 may include: a reception-side resonant circuit 201 that receives an AC signal transmitted from the power transfer unit 1000; a reception-side power converter 202 that outputs a DC signal by performing power conversion on an AC current from the reception-side resonant circuit unit 201; and a reception-side controller 203 that can sense current voltages of a load 2500, which is charged by receiving a DC signal output from the reception-side converter 202, and the reception-side resonant circuit unit 201, perform impedance matching of the reception-side resonant circuit unit 201, or control power conversion of the reception-side power converter 202, and can adjust the level of an output signal of the reception-side power converter 202, sense an input or output voltage or current of the reception-side power converter 202, control whether to supply the output signal of the reception-side power converter 202 to the load 2500, or communicate with the power transfer unit 1000. The reception-side power converter 202 may include a power converter that converts an AC signal into a DC signal, a power converter that outputs a DC by varying the level of a DC, and a power converter that converts a DC into an AC. Referring to FIG. 4B, a wireless power transfer system according to an embodiment may include a power transfer unit (or a transmitter) 1000 and a power receiver unit (or a receiver) 2000 that wirelessly receives power from the power transfer unit 1000. The power receiver unit 2000 may include a reception-side resonant circuit unit 2120 composed of a reception-side coil unit 2100 and a reception-side impedance matching unit 2200, a reception-side AC/DC converter 2300, a DC/DC converter 2400, a load 2500, and a reception-side communication & control unit 2600. The reception-side AC/DC converter 2300 may be referred to as a rectifier that rectifies an AC signal into a DC signal.

The reception-side coil unit 2100 can receive power through the magnetic induction method or the magnetic resonance method. The reception-side coil unit 2100 may include one or more of an induction coil or a resonant coil, depending on the power reception method.

For example, the reception-side coil unit 2100 may be disposed in a mobile terminal together with an antenna for near field communication (NFC). The reception-side coil unit 2100 may be the same as the transfer-side coil unit 1400 and the dimensions of the receiving antenna may depend on the electrical characteristic of the power receiver unit 200.

The reception-side impedance matching unit 2200 perform impedance matching between the power transfer unit 1000 and the power receiver unit 2000.

The reception-side AC/DC converter 2300 generates a DC signal by rectifying an AC signal output from the reception-side coil unit 2100. The output voltage of the reception-side AC/DC converter 2300 may be referred to as a rectified voltage $V_{rect}$, and the reception-side communication & control unit 2600 can detect or change the output voltage of the reception-side AC/DC converter 2300 and can transmit state parameter information such as information about a minimum rectified voltage $V_{rect\_min}$ (or referred as a minimum output voltage $V_{rect\_min}$) that is the minimum value of the output voltage of the reception-side AC/DC converter 2300, a maximum rectified voltage $V_{rect\_max}$ (or referred to as a maximum output voltage $V_{rect\_max}$) that is the maximum value of the output voltage, and an optimum rectified voltage $V_{rect\_set}$ (or referred to as an optimum output voltage $V_{rect\_set}$) that has any one voltage value of values between the minimum value and the maximum value.

The reception-side DC/DC converter 2400 can adjust the level of the DC signal output from the reception-side AC/DC converter 2300 to fit the capacity of the load 2500.

The load 2500 may include a battery, a display, a voice output circuit, a main processor, and various sensors.

The reception-side communication & control unit 2600 can be activated by wake-up power from the transfer-side communication & control unit 1500, communicate with the transfer-side communication & control unit 1500, and control the operation of the sub-systems of the power receiver unit 2000.

One or a plurality of power receiver units 2000 may be provided and can wirelessly simultaneously receive energy from the power transfer unit 1000. That is, in a wireless power transfer system using the magnetic resonance method, a plurality of target power receiver units 2000 can receive power from one power transfer unit 1000. The transfer-side matching unit 1300 of the power transfer unit 1000 can adaptively perform impedance matching among a plurality of power receiver units 2000. This can be applied in the same way even though a plurality of independent reception-side coil units is provided in the magnetic induction method.

When a plurality of power receiver units 2000 is provided, they may be systems that use the same power reception method or different power reception types. In this case, the power transfer unit 1000 may be a system that transfers power, using magnetic induction or magnetic resonance, or a system that uses both of magnetic induction and magnetic resonance.

The relationship between the magnitude and the frequency of a signal in a wireless power transfer system is described. In wireless power transfer using the magnetic induction method, in the power transfer unit 1000, the transfer-side AC/DC converter 1100 can receive and convert an AC signal of a tens of or hundreds of voltage (for example 110V ~ 220V) at a tens of or hundreds of hertz (for example, 60Hz) into a DC signal of a several to hundreds or hundreds of voltage (for example 10V ~ 20V) and output the DC signal, and the transfer-side DC/AC converter 1200 can receive a DC signal and output an AC signal at KHz (for example 125KHz). The reception-side AC/DC converter 2300 of the power receiver unit 2000 can receive and convert an AC signal at KHz (for example, 125KHz) into a DC signal of a several to hundreds or hundreds of voltage (for example 10V ~ 20V) and output the DC signal, and the reception-side DC/DC converter 2400 can output and transmit a DC signal suitable for the load 2500, for example, a DC signal of 5V to the load 2500. In wireless power transfer using the magnetic resonance method, in the power transfer unit 1000, the transfer-side AC/DC converter 1100 can receive and convert an AC signal of a tens of or hundreds of voltage (for example 110V ~ 220V) at a tens of or hundreds of hertz (for example, 60Hz) into a DC signal of a several to hundreds or hundreds of voltage (for example 10V ~ 20V) and output the DC signal, and the transfer-side DC/AC converter 1200 can receive a DC signal and output an AC signal at MHz (for example 6.78MHz). The reception-side AC/DC converter 2300 of the power receiver unit 2000 can receive and convert an AC signal at MHz (for example, 6.78MHz) into a reception-side DC signal of a several to hundreds or hundreds of voltage (for example 10V ~ 20V) and output the reception-side DC signal, and the reception-side DC/DC converter 2400 can output and transmit a DC signal suitable for the load 2500, for example, a DC signal of 5V to the load 2500.

<Operation mode of power transfer unit and power receiver unit>

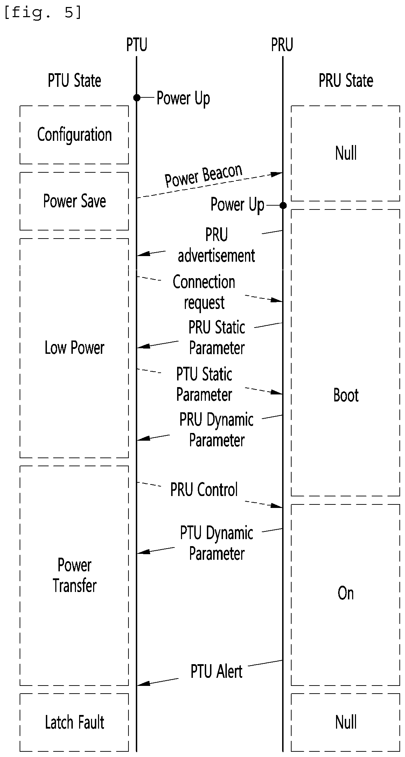

FIG. 5 is a diagram showing the operation flow of a wireless power transfer system.

- Operation state of power transfer unit

Referring to FIG. 5, the power transfer unit 1000 according to an embodiment may have at least 1) a configuration mode 2) a power save mode, 3) a low power mode, 4) a power transfer mode, and 5) a latch fault mode.

[Configuration mode]

(1) When power is supplied to the power transfer mode 1000 (Power Up), the configuration mode can be entered.

(2) The power transfer unit 1000 itself can check the system.

(3) The power transfer unit 1000 can maintain a current $I_{tx\_in}$ that is applied to the transfer-side coil 1400 at a specific current value (for example, 20mArms) or less, and if the input current $I_{tx\_in}$ of the transfer-side coil 1400 is larger than the specific current value, it is possible to reduce the input voltage $I_{tx\_in}$ of the transfer-side coil 1400 to the specific current value or less within specific time (for example, 50ms) after the power transfer unit 1000 entered the configuration mode.

(4) The power transfer unit 1000 can enter the power save mode within predetermined time (for example, 4s) after it entered the configuration mode.

[Power save mode]

(1) In the power save mode, the power transfer unit 1000 can apply different power beacons to the transfer-side coil 1400 at each period.

(2) The power beacons may include a short beacon and a long beacon and the short beacon can have a power amount required fro detecting various power receiver units 2000. The long beacon can have a power amount required for driving the communication & control unit 2600 of the power receiver unit 2000. The long beacon can have a power amount that can maintain a sufficient voltage for inducing a response of the power receiver unit 2000 at the power receiver unit 2000. The short beacon can have a first period and the long beacon can have a second period. The short beacon may include a plurality of short beacons having different power amounts and the long beacon may include a plurality of long beacons having different power amounts.

(3) The power transfer unit 1000 can detect a change in reactance of input impedance $Z_{tx\_in}$, resistance of the input impedance $Z_{tx\_in}$, or the input impedance $Z_{tx\_in}$ of the transfer-side coil 1400 and the transfer-side impedance matching unit 1300 while applying a shot beacon.

(4) When the power transfer unit 1000 detects a change in reactance of the input impedance $Z_{tx\_in}$, resistance of the input impedance $Z_{tx\_in}$, or the input impedance $Z_{tx\_in}$, it can immediately apply a long beacon.

(5) The power transfer unit 1000 can be driven by the long beacon of the power transfer unit 1000, and the power transfer unit 1000 can communicate with the power receiver unit 2000 on the basis of a predetermined method. When the power transfer unit 1000 receives advertisement from the power receiver unit 2000, it can enter the low power mode.

(6) When the power transfer unit 1000 could not detect a change in the input impedance $Z_{tx\_in}$ itself or in reactance or resistance of the input impedance $Z_{tx\_in}$, it can maintain the power save mode.

(7) When the power transfer unit 1000 detected a change in the input impedance $Z_{tx\_in}$ itself or in reactance or resistance of the input impedance $Z_{tx\_in}$, it can determine that an object exists in the charging area and enter the low power mode.

[Low power mode]

(1) In the low power mode, the power transfer unit 1000 and the power receiver unit 2000 can be connected by a predetermined communication method (for example, Bluetooth low energy (BLE) and can transmit and receive data, and the power receiver unit 2000 can join a wireless power network that the power transfer unit 1000 manages. The power transfer unit 1000 can enter the power transfer mode. The power transfer unit 1000 can sense an object positioned on a transfer pad, using a beacon signal, and determine whether the object is a device that can wirelessly receive power. The beacon signal may use a short beacon and a long beacon. The power receiver unit 2000 (or the reception-side communication & control unit) receiving the long beacon signal can be woken up (or powered up) and can transmit an advertisement (PRU advertisement) to the power transfer unit 1000.

(2) The power transfer unit 1000 receiving the advertisement (PRU advertisement) from the power receiver unit 2000 can form connection between the power transfer unit 1000 and the power receiver unit 2000 by transmitting a connection request signal to the power receiver unit 2000.

2-1) When the power receiver unit 2000 receives the connection request signal from the power transfer unit 1000, the power receiver unit 2000 can transmit power receiver unit power receiver unit parameter information to the power transfer unit 1000 (or the power transfer unit 1000 can read information from the power receiver unit 2000) and the power transfer unit 1000 can also transmit power transfer unit parameter information to the power receiver unit 2000 (or the power transfer unit 1000 can write information on the power receiver unit 2000). The PRU parameter information, which is information about the output voltage $V_{rect}$ of the reception-side AC/DC converter 2300, may include the minimum output voltage $V_{rect\_min}$, the maximum output voltage $V_{rect\_max}$, and the optimum output voltage $V_{rect\_set}$. The optimum output voltage may have any one voltage value of values over the minimum output voltage $V_{rect\_min}$ and under the maximum output voltage $V_{rect\_max}$.

2-2) In detail, the power transfer unit can receive a power receiver unit static parameter from the power receiver unit 2000. The power receiver unit static parameter may be state information previous fixed as a signal indicating the state of the power receiver unit 2000. The power receiver unit static parameter may include selective filed information, protocol information, information about the output voltage $V_{rect}$ of the reception-side AC/DC converter 2300, information about the output power of the reception-side AC/DC converter 2300.

2-3) The power transfer unit 1000 receiving the power receiver unit static parameter can transmit a power transmitter unit parameter (PTU static parameter) to the power receiver unit 2000. The power transmitter unit parameter (PTU static parameter) may be a signal indicating the capability of the power transfer unit 1000.

2-4) The power transfer unit 1000 can receive a power receiver unit dynamic parameter (PRU dynamic parameter) from the power receiver unit 2000. The power receiver unit dynamic parameter may include at least one item of parameter information measured by the power receiver unit 2000. For example, the power receiver unit dynamic parameter may include information about the output voltage $V_{rect}$ of the reception-side AC/DC converter 2300. The power receiver unit dynamic parameter can include and provide a set voltage value rearranged in accordance with the wireless charge situation to the power transfer unit 1000 and the power transfer unit 1000 can update a power receiver unit control table on a registry, that is, an initially set voltage value of the power receiver unit static parameter to fit the situation on the basis of the rearranged set voltage value. The power transfer unit 1000 can control power transfer on the basis of the recently updated set value.

2-5) The power receiver unit dynamic parameter may include selective field information, information about the output voltage $V_{rect\_dyn}$ of the reception-side AC/DC converter 2300, the minimum output voltage $V_{rect\_min\_dyn}$ of the reception-side AC/DC converter 2300, the maximum output voltage $V_{rect\_max\_dyn}$ of the reception-side AC/DC converter 2300, the optimum output voltage $V_{rect\_set\_dyn}$ of the reception-side AC/DC converter 2300, and the output current of the reception-side AC/DC converter 2300, information about the output current of the reception-side DC/DC converter 2400, temperature information, alert information (PRU alert), etc.

2-6) The alert information may include information such as over voltage, over current, over temperature, charge complete, wire charge terminal lead-in detection (TA detect), SA mode/NSA mode transition, and restart request.

(3) When an object in the charging area is not the power receiver unit 200, but a metallic foreign object, data transmission and reception cannot be made between the power transfer unit 1000 and the object. Accordingly, when the power transfer unit 1000 could not receive a response from the object for a predetermined time, it can determine that the object is a foreign object and enter the latch fault mode.

[Latch fault mode]

(1) When the power transfer unit 1000 enters the latch fault mode, the power transfer unit 1000 can periodically apply a short beacon to the reception-side coil unit 400 (that is, transmit a short beacon to the power receiver unit 2000).

(2) When the power transfer unit 1000 detected a change in the input impedance $Z_{tx\_in}$ itself or in reactance or resistance of the input impedance $Z_{tx\_in}$ from the short beacon, it can determine that an object is out of the charging area and enter the power save mode or a configuration state.

(3) When the power transfer unit 1000 could not detect a change in the input impedance $Z_{tx\_in}$ itself or in reactance or resistance of the input impedance $Z_{tx\_in}$, it can determine that the object has not been recovered and inform a user that the current state of the power transfer unit 1000 is an error state. Accordingly, the power transfer unit 1000 may include a lamp or an output unit that displays an alert such as an alarm.

(4) The latch fault mode may have various latch fault mode enter conditions other than the case in which an object is a foreign object. For example, when there is an error situation corresponding to the alarm information, the power transfer unit 1000 can enter the latch fault mode.

[Power transfer mode]

(1) The power transfer unit 1000 enters the power transfer mode, and the power transfer unit 1000 can output power receiver unit control information (PRU control) on the basis of the parameter information received from the power receiver unit 2000. The power receiver unit control information (PRU control) may include information that enables/disables charge of the power receiver unit 2000 and permission information. When the power transfer unit 1000 can provide power enough to charge the power receiver unit 2000, it can output the power receiver unit control information (PRU control) including enabling information.

(2) The power transfer unit 1000 can provide the power receiver unit control information power receiver unit control information (PRU control) to the power receiver unit 2000 at least periodically or in accordance with a necessity of changing the state of the power receiver unit 2000. The power receiver unit 2000 can change the state on the basis of the power receiver unit control information (PRU control) and output the power receiver unit dynamic parameter to the power transfer unit 1000 to report the state of the power receiver unit 2000. For example, the power receiver unit control information (PRU control) may include adjustment information to change the maximum power value $P_{max}$ of the power receiver unit 2000 and the power receiver unit 2000 can transmit changed information to the power transfer unit 1000 by adjusting at least one of requested voltage/current information and the optimum output voltage of the reception-side AC/DC converter 2300 in accordance with the adjustment information.
As another embodiment, the power receiver unit control information (PRU control) may include adjustment information for changing the information about the output voltage $V_{rect}$ of the reception-side AC/DC converter 2300 of the power receiver unit 2000 and the power receiver unit 2000 can adjust the requested voltage/current information or the optimum output voltage $V_{rect\_set\_dyn}$ and the output voltage $V_{rect}$ of the reception-side AC/DC converter 2300 and then transmit information about the adjustment to the power transfer unit 1000.

(3) The power receiver unit 2000 is permitted to be charged and power can be transferred from the power transfer unit 1000 to the power receiver unit 2000. The power transfer unit 1000 can periodically receive the power receiver unit dynamic parameter from the power receiver unit 2000. The power receiver unit dynamic parameter may include the state and temperature information of the wireless power receiver unit.

(4) The power receiver unit control information may include information for controlling the output voltage $V_{rect}$ of the reception-side AC/DC converter 2300 of the power receiver unit 2000.

- Operation state of power receiver unit

Referring to FIG. 5, the power receiver unit 2000 according to an embodiment may have at least 1) a null state, 2) a boot state, and 3) an on-state.

[Null state]

(1) The power receiver unit 2000 can become a null state when the output voltage $V_{rect}$ of the reception-side AC/DC converter 2300 is less than a boot output voltage $V_{rect\_boot}$.

(2) The power receiver unit 2000 can enter the null state when power is supplied to the power receiver unit 2000 (Power UP) and the output voltage $V_{rect}$ of the reception-side AC/DC converter 2300 is less than the boot output voltage $V_{rect\_boot}$.

(3) After going out of the null state, the power receiver unit 2000 can enter the null state when the output voltage $V_{rect}$ of the reception-side AC/DC converter 2300 becomes an output voltage under a lock-out voltage (under voltage lock Out; $V_{rect\_UVLO}$). The output voltage under a lock-out voltage ($V_{rect\_UVLO}$) may be smaller than the boot output voltage ($V_{rect\_boot}$).

[Boot state]

(1) The power receiver unit 2000 (or the reception-side communication & control unit) receiving a long beacon can be woken up (or powered up). When the power receiver unit 2000 has not been completely charged, it can transmit (or broadcast) an advertisement signal (PRU advertisement) and can wait a connection request from the power transfer unit 1000.

(2) The advertisement signal (PRU advertisement) can be periodically transmitted (or broadcasted) and the period may be changed over time. The power receiver unit 2000 can periodically transmit (or broadcast) the advertisement signal until it receives a connection request signal from the power transfer unit 1000.

(3) The power transfer unit 1000 can transmit a connection request signal for connecting to the power receiver unit 2000 on the basis of information included in the advertisement signal (PRU advertisement). When receiving the connection request signal for the advertisement signal (PRU advertisement) from the power transfer unit 1000 power receiver unit 2000, the power receiver unit 2000 and the power transfer unit 1000 can form connection. The power receiver unit 2000 can transmit a power receiver unit static parameter, receive a power transfer unit static parameter from the power transfer unit 1000, and transmit a power receiver unit dynamic parameter to the power transfer unit 1000.

[On-state]

(1) The power receiver unit 2000 receives power receiver unit control information (PRU control) from the power transfer unit 1000, and when it is enabled by the power receiver unit control information (PRU control), it becomes the on-state and can receive power from the power transfer unit 1000.

(2) The power receiver unit 2000 can provide state information thereof by transmitting a power receiver unit dynamic parameter to the power transfer unit 1000.

- Procedure of setting charge voltage

(1) When wireless charge permission information about the power transfer unit 1000 is included in the power receiver unit control unit (PRU control) provided from the power transfer unit 1000 to the power receiver unit 2000, wireless charging can be started.

(2) The power transfer unit 1000 can transmit charge power on the basis of the power receiver unit static parameter.

(3) The power transfer unit 1000 can adjust the charge power on the basis of the power receiver unit dynamic parameter reflecting the state information of the power receiver unit 2000.

The charge power adjustment is an operation of the power receiver unit 2000 corresponding to description about the low power state and the power transfer state, so it is not described in detail. However, the description may be applied also to embodiments of the power receiver unit 2000.

<Multi-charge method>

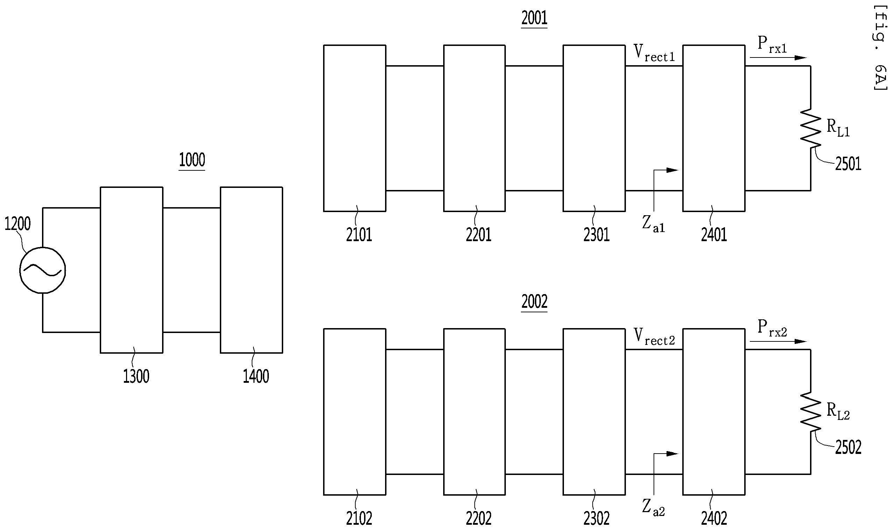

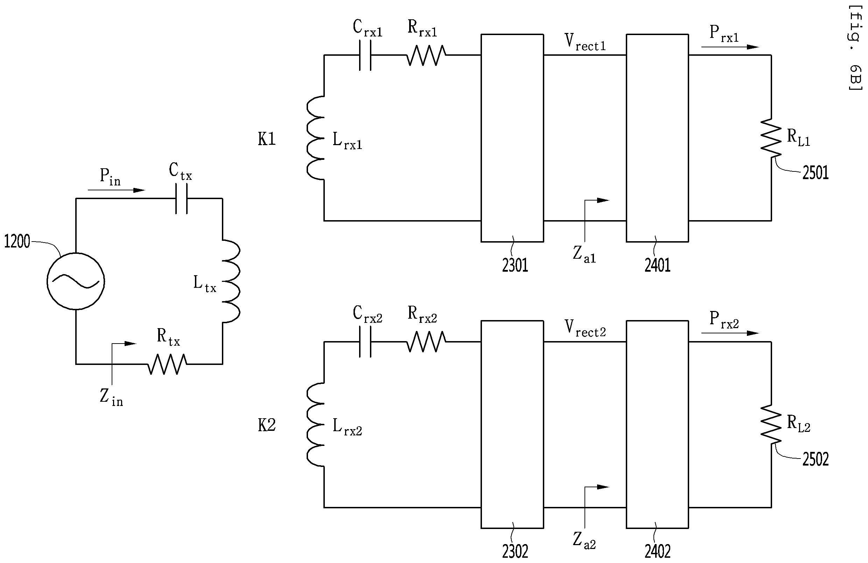

FIG. 6A is a diagram showing first and second power receiver units that wirelessly receive power from a power transfer unit and FIG. 6B is a diagram showing equivalent circuits of the power transfer unit and the first and second power receiver units.
A power control method in multi-charge is described with reference to FIGS. 6A and 6B.

(1) A multi-charge method when a plurality of power receiver units, for example, first and second power receiver unit 2001 and 2002 is disposed in the charge area of the power transfer unit 1000 is described.

(2) For example, a state in which two power receiver units are provided is exemplified, but the present invention is not limited thereto. The number of power receiver units 2000 that can be charged by one power transfer unit 1000 may be determined by the maximum output voltage $P_{tx\_in\_max}$ of a power transfer unit output from the power converter 101 of the power transfer unit 1000 to the resonant circuit unit 102 and the maximum output power $P_{rx\_out\_max}$ output from the resonant circuit unit 2020 of a power receiver unit. For example, the maximum output power $P_{tx\_in\_max}$ of the power transfer unit 1000 is 16W, the first maximum output power $P_{rx1\ out\_max}$ of the first power receiver unit 2001 is 3.5W, and the second maximum output power $P_{rx2\_out\_max}$ of the second power receiver unit 2002 is 6.5W, the power transfer unit 1000 can charge two first power receiver units 2001 and one second power receiver unit 2002.

However, when a power sharing mode is supported for the power receiver unit 2000, more power receiver units may be charged by making a power transfer unit adjust the maximum output power of the power transfer units (use Power control).

1) The transfer-side impedance matching unit 1300 and the transfer coil unit 1400 of the power transfer unit 1000 can be expressed as an equivalent circuit of a transfer-side resistor $R_{tx}$, a transfer-side capacitor $C_{tx}$, and a transfer-side inductor $L_{tx}$, and the transfer-side capacitor $C_{tx}$, and transfer-side inductor $L_{tx}$ are expressed in series, but they are not limited thereto and may be expressed in parallel. An output power $P_{in}$ from the transfer-side DC/AC converter 1200 can be provided to the transfer-side impedance matching unit 1300 and the transfer coil unit 1400.
The first reception-side coil unit 2101 and the first reception-side impedance matching unit 2201 of the first power receiver unit 2001 can be expressed as an equivalent circuit of a first reception-side resistance $R_{rx1}$, a first reception-side inductor $L_{rx1}$, and a first reception-side capacitor $C_{rx1}$, and the first reception-side inductor $L_{rx1}$ and the first reception-side capacitor $C_{rx1}$ are expressed in series, but they are not limited thereto and may be expressed in parallel.
The second reception-side coil unit 2102 and the second reception-side impedance matching unit 2202 of the second power receiver unit 2002 can be expressed as an equivalent circuit of a second reception-side resistance $R_{rx2}$, a second reception-side inductor $L_{rx2}$, and a second reception-side capacitor $C_{rx2}$, and the second reception-side inductor $L_{rx2}$ and the second reception-side capacitor $C_{rx2}$ are expressed in series, but they are not limited thereto and may be expressed in parallel.

The transfer-side inductor $L_{tx}$ of the power transfer unit 1000 can be magnetically coupled to the first reception-side inductor $L_{rx1}$ of the first power receiver unit 2001 with a first coupling coefficient $K_1$ and can be magnetically coupled to the second reception-side inductor $L_{rx2}$ of the second power receiver unit 2002 with a second coupling coefficient $K_2$.

2) A first input resistance $R_{a1}$ that is a natural number part of first input impedance $Z_{a1}$ of a first DC/DC converter 2401 of the first power receiver unit 2001 when the first load 2501 is seen from an input port of the first DC/DC converter 2401 can be expressed as Equation 3 by first output power $P_{rx1}$ of the first DC/DC converter 2401 and an input voltage of the first DC/DC converter 2401, that is, a first output voltage $V_{rect1}$ of the first reception-side AC/DC converter 2301.

Equation 3

$$R_{a1} = \frac{V_{rect1}^{2}}{P_{rx1}}$$

The first output power $P_{rx1}$ can be defined as product of the effective values of the first output voltage $V_{rect1}$ and a first output current $I_{rx1}$ of the first reception-side AC/DC converter 2301. Accordingly, first output power $P_{rx1}$ of the first reception-side AC/DC converter 2301 can be considered as being provided to the first load 2501 via the first DC/DC converter 2401.

First input impedance $Z_{in1}$ (input impedance of the resonant circuit unit 102) when the first power receiver unit 2001 is seen from an input port of the transfer-side impedance matching unit 1300 in a resonant state of the power transfer unit 1000 and the first power receiver unit 2001 can be expressed as Equation 4.

Equation 4

$$Real\{Z_{in1}\} = \frac{\omega^2 K_1^2 L_{tx} L_{rx1}}{R_{a1}} = \frac{P_{rx1}}{V_{rect1}^{2}} \omega^2 K_1^2 L_{tx} L_{rx}$$

First input power $P_{in1}$ that is output from the transfer-side DC/AC converter 1200 and the transfer-side impedance matching unit 1300 (that is, input power of the resonance circuit unit 102) can be expressed as Equation 5.

Equation 5

$$P_{in1} = \frac{V_{in}^{2}}{Real\{Z_{in}\}} = \frac{V_{rect1}^{2} V_{in}^{2}}{P_{rx1} \omega^2 K_1^2 L_{tx} L_{rx1}}$$

3) A second input resistance $R_{a2}$ that is a natural number part of second input impedance $Z_{a2}$ of a second DC/DC converter 2402 of the second power receiver unit 2002 when the second load 2502 is seen from an input port of the second DC/DC converter 2402 can be expressed as Equation 6 by second output power $P_{rx2}$ of the second DC/DC converter 2402 and an input voltage of the second DC/DC converter 2402, that is, a second output voltage $V_{rect2}$ of the second reception-side AC/DC converter 2302.

Equation 6

$$P_{a2} = \frac{V_{rect2}^{2}}{P_{rx2}}$$

The second output power $P_{rx2}$ can be defined as product of the effective values of the second output voltage $V_{rect2}$ and a second output current $I_{rx2}$ of the second reception-side AC/DC converter 2302. Accordingly, second output

power $P_{rx2}$ of the second reception-side AC/DC converter 2302 can be considered as being provided to the second load 2501 via the second DC/DC converter 2402.

4) Second input impedance $Z_{in2}$ (input impedance of the resonant circuit unit 102) when the second power receiver unit 2002 is seen from the input port of the transfer-side impedance matching unit 1300 in a resonant state of the power transfer unit 1000 and the second power receiver unit 2002 can be expressed as Equation 7.

Equation 7

$$Real\left\{Z_{in2}\right\} = \frac{\omega^2 K_2^2 L_{tx} L_{rx2}}{R_{a2}} = \frac{P_{rx2}}{V_{rect2}^2}\omega^2 K_2^2 L_{tx} L_{rx2}$$

Second input power $P_{in2}$ that is output from the transfer-side DC/AC converter 1200 and the transfer-side impedance matching unit 1300 (that is, input power of the resonance circuit unit 102) can be expressed as Equation 8.

Equation 8

$$P_{in2} = \frac{V_{in}}{Real\left\{Z_{in2}\right\}} = \frac{V_{in}}{P_{tx}} = \frac{V_{rect2}^2 V_{in}^2}{P_{rx2}\omega^2 K_2^2 L_{tx} L_{rx2}}$$

5) The power transfer unit 1000 can input the entire input power $P_{in1}$ that is the sum of the first input power $P_{in2}$ and the second input power to the transfer-side impedance matching unit 1300.

(2) According to Equation 5, the first output power $P_{rx1}$ and the first input power $P_{in1}$ of the first DC/DC converter 2401 are in inverse proportion to each other, so it can be seen that when the first output power $P_{rx1}$ is decreased, the first input power $P_{in1}$ is increased. Similarly, according to Equation 8, the second output power $P_{rx2}$ and the second input power $P_{in2}$ of the second DC/DC converter 2402 are in inverse proportion to each other, so it can be seen that when the second output power $P_{rx2}$ is increased, the second input power $P_{in2}$ is decreased. Further, it can be seen that transfer power is more supplied to a power receiver unit that requires less reception power. This can be expressed as Equation 9.

Equation 9

$$V_{rect2} = V_{rect1}^2 \frac{P_{rx2}}{P_{rx1}}$$

(3) The first output voltage $V_{rect1}$ of the first reception-side AC/DC converter 2301 and the second output voltage $V_{rect2}$ of the second reception-side AC/DC converter 2302 are required to be adjusted in consideration of the first and second output power $P_{rx1}$ and $P_{rx2}$ in order to stably operate the first and second power receiver units 2001 and 2002.

First example, when the first output voltage $V_{rect1}$ is half the second output voltage $V_{rect2}$, it is possible to reduce power that is supplied to the first power receiver unit 2001 to a half the power that is supplied to the second power receiver unit 2002 by controlling the power of the first and second power receiver units 2001 and 2002 such that the first output voltage $V_{rect1}$ becomes 1/4 of the second output voltage $V_{rect2}$.

In this case, transfer voltage is applied in proportion to reception power, the wireless power transfer system can be stable.

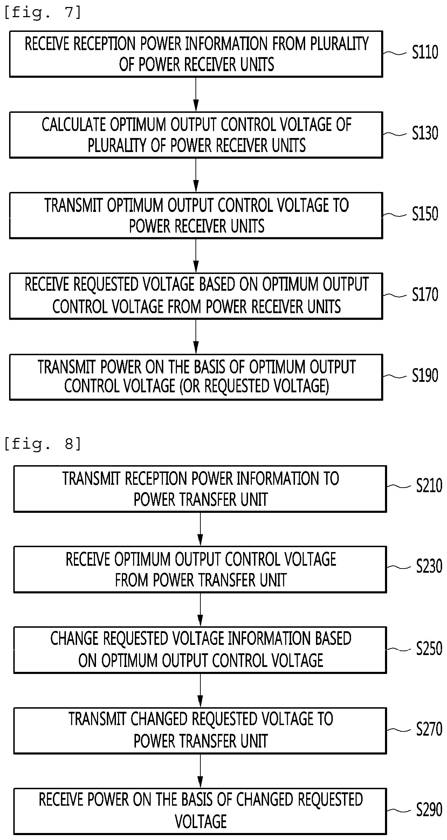

FIG. 7 is a diagram showing the operation flow of a power transfer unit.

Referring to FIG. 7, a power transfer unit 1000 according to an embodiment can wirelessly transfer power by performing a first step S110 that receives reception power information from a plurality of power receiver units 2000, a second step S130 that calculate the optimum power control voltages of the power receiver units 2000, a third step S150 that transmit an optimum output control voltage to the power receiver units 2000, a fourth step S170 that receives an optimum rectified voltage $V_{rect\_set}$, a minimum output voltage $V_{rect\_min}$, and a maximum output voltage $V_{rect\_max}$ that are requested voltages based on the optimum output voltage, and a fifth step S190 that transfers power on the basis of the optimum output control voltage or the requested voltages. The third step S130 can be removed and the fourth step S170 can be removed. That is, the power transfer unit 1000 can wirelessly transfer power to the power receiver units 2000 on the basis of the optimum output control voltage in the fifth step S190 after performing the first and second steps S110 and S130.

FIG. 8 is a diagram showing the operation flow of a power receiver unit.

Referring to FIG. 8, a plurality of power receiver units 2000 according to an embodiment can wirelessly receive power by performing a first step S210 that transmits reception power information from a power transfer unit 1000, a second step S230 that receives the optimum output control voltage from the power transfer unit 1000, a third step S250 that changes requested voltage information based on the optimum output control voltage, a fourth step S270 that transfers an optimum rectified voltage $V_{rect\_set}$, a minimum output voltage $V_{rect\_min}$, and a maximum output voltage $V_{rect\_max}$ that are the changed requested voltage to the power transfer unit 1000, and a fifths step S290 that receives power on the basis of the optimum output control voltage or the changed requested voltages.

When the power transfer unit 1000 wirelessly transfers power by performing the first, second, and third steps S100, S130, and S150, the power receiver units 200 can wirelessly receive the power by performing the first step S210 that transmits reception power information from the power transfer unit 1110 and the fifth step S290 that receives power on the basis of the optimum output control voltage, so the second, third, and fourth steps S220, S230, and S250 can be removed.

- When first and second power receiver units enter charge area

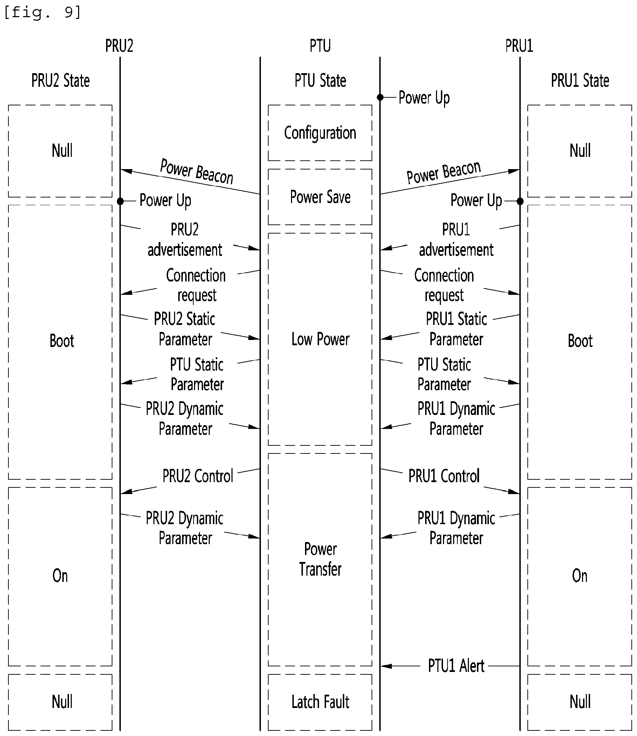

FIG. 9 is a diagram showing the operation flow of a power transfer unit and first and second power receiver units.

A case in which first and second power receiver units are in a charge area is described with reference to FIG. 9.

(1) When power is supplied to the power transfer mode 1000 (Power Up), the configuration mode can be entered. In the power save mode, the power transfer unit 1000 can apply different power beacons to the transfer-side coil 1400 at each period. Using the power beacons, it is possible to detect a change in input impedance $Z_{tx\_in}$ or to induce a response from a power receiver unit in the charge area by driving the power receiver unit.

(2) The power transfer unit 1000 receiving advertisement signals (PRU advertisement) from the first and second power receiver units 2001 and 2002 enters the low power mode and transmits a connection request signal to the first and second power receiver units 2001 and 2002 in response to the advertisement signals (PRU advertisement), whereby connection between the power transfer unit 1000 and the first and second power receiver units 2001 and 2002 can be formed. When receiving a response signal from the power transfer unit 1000, the first and second power receiver units 2001 and 2002 can stop outputting the advertisement signal (PRU advertisement).

(3) The power transfer unit 1000 can receive a power receiver unit static parameter about information about the state of the first and second power receiver units 2001 and 2002 from the power receiver units 2001 and 2002 and can transmit a power transfer unit static parameter about the capability of the power transfer unit 1000 to the power receiver units 2001 and 2002. After the static parameter information is exchanged between the power transfer unit 1000 and the first and second power receiver units 2001 and 2002, the power transfer unit can receive a power receiver unit dynamic parameter that is parameter information about the state, temperature, and current voltage measured from the first and second power receiver units 2001 and 2002. The power transfer unit 1000 can output a power receiver unit control information (PRU control) including charge enabling/disabling and permission information to the power receiver unit 2001 and 2002. The power receiver unit control information (PRU control) can be output (transmitted) not temporarily, but repeatedly, if necessary, and when a power receiver unit dynamic parameter that is periodically received is received, the power receiver unit control information can be output in correspondence to the parameter. The power receiver unit control information (PRU control) may include information that can control parameters of the power receiver units 2001 and 2002. The power transfer unit 1000 can update a power receiver unit control table on the registry of the power transfer-side communication & control unit 1500 corresponding to the power receiver units 2001 and 2002 on the basis of the power receiver unit dynamic parameters of the power receiver units 2001 and 2002 that are periodically received, and the transfer-side communication & control unit 1500 can control the entire wireless power transfer on the basis of the updated power receiver unit control table.

(4) The power transfer unit 1000 can receive a first minimum output voltage $V_{rect1\_min\_dyn}$, a first maximum output voltage $V_{rect1\_max\_dyn}$, and a first optimum output voltage $V_{rect1\_set\_dyn}$ of the first output voltage $V_{rect1}$ of the first power receiver unit 2001, and can receive a second minimum output voltage $V_{rect2\_min\_dyn}$, a second maximum output voltage $V_{rect2\_max\_dyn}$, and a second optimum output voltage $V_{rect2\_set\_dyn}$ of the second output voltage $V_{rect2}$ of the second power receiver unit 2002. Further, it is possible to receive first output power $P_{rx1}$ of the first power receiver unit 2001 and second output power $P_{rx2}$ of the second power receiver unit 2002, or it is possible to determine the first and second output power $P_{rx1}$ and $P_{rx2}$, using output current information of the first reception-side AC/DC converter 2301, output current information of the second reception-side AC/DC converter 2302, and the output voltages $V_{rect1}$ and $V_{rect2}$.

Further, it is possible to check whether a specific voltage value within the range of the first output voltage $V_{rect1}$, a specific voltage value within the range of the second output voltage $V_{rect2}$, and the first and second output power $P_{rx1}$ and $P_{rx2}$ satisfy Equation 9.

1) For example, when the first optimum output voltage $V_{rect1\_set}$ is smaller than the second optimum output voltage $V_{rect2\_set}$ and the first output power $P_{rx1}$ is smaller than the second output power $P_{rx2}$, in detail, when there is a specific output voltage value within the range of the first minimum output voltage $V_{rect1\_min\_dyn}$ to the first maximum output voltage $V_{rect1\_max\_dyn}$ that satisfies Equation 9 and there is a specific output voltage within the range of the second minimum output voltage $V_{rect2\_min\_dyn}$ to the second maximum output voltage $V_{rect2\_max\_dyn}$, the power transfer unit 1000 can transmit the power receiver unit control information (PRU control) including charge permission information to the first and second power receiver units 2001 and 2002.

1-1) The power transfer unit 1000 can transmit information about the first and second optimum output control voltages $V_{rect1\_con\_set}$ and $V_{rect2\_con\_set}$ created on the basis of Equation 9 to the first and second power receiver units 2001 and 2002 together with the power receiver unit control information (PRU control) such that the first and second power receiver units 2001 and 2002 newly set the first and second optimum output voltages $V_{rect1\_set}$ and $V_{rect2\_set}$ that satisfy Equation 9. The first and second power receiver units 2001 and 2002 can generate and transfer a requested voltage to the power transfer unit 1000 in correspondence to the first and second optimum output control voltages $V_{rect1\_con\_set}$ and $V_{rect2\_con\_set}$. The requested voltage is an optimum output voltage $V_{rect\_set}$ thereof changed on the basis of first and second optimum output control voltages $V_{rect1\_con\_set}$ and $V_{rect2\_con\_set}$.

1-2) When Equation 9 is satisfied even if the output voltage $V_{rect}$ of the AC/DC converter of any one of the first and second power receiver units 2001 and 2002, an optimum output control voltage $V_{rect\_con\_set}$ can be set and transferred to the corresponding power receiver unit such that only one output voltage $V_{rect}$ required to be adjusted is adjusted within the range of the minimum and maximum output voltages $V_{rect\_min}$ and $V_{rect\_max}$ to satisfy Equation 9. The power receiver unit receiving the optimum output control voltage can transfer a requested voltage generated on the basis of the optimum output control voltage $V_{rect\_con\_set}$ to the power transfer unit 1000. The requested voltage is an optimum output voltage $V_{rect\_set}$ thereof changed on the basis of the optimum output control voltage $V_{rect\_con\_set}$.

1-3) The power transfer unit 1000 can receive a power receiver unit dynamic parameter from the power receiver units 2001 and 2002 as a response signal for the power receiver unit control information (PRU control) and can provide power on the basis of the optimum output voltages $V_{rect\_set}$ of the power receiver units 2001 and 2002 (requested voltages generated on the basis of the optimum output control voltage $V_{rect\_con\_set}$. Alternatively, the power transfer unit 1000 may provide power on the basis of the optimum output control voltage $V_{rect\_con\_set}$ without waiting the response signal for the power receiver unit control information (PRU control).

It is possible to generate and provide first input power $P_{in1}$, which is set on the basis of the first optimum output voltage $V_{rect1\_set}$ and the second optimum output voltage $V_{rect2\_set}$, to the first power receiver unit 2001 and to generate and provide second input power $P_{in2}$ to the second power receiver unit 2002.

2) When the first optimum output voltage $V_{rect1\_set}$ is smaller than the second optimum output voltage $V_{rect2\_set}$, but first output power $P_{rx1}$ is larger than the second output power $P_{rx2}$, or when the first optimum output voltage $V_{rect1\_set}$ is larger than the second optimum output voltage $V_{rect2\_set}$, but first output power $P_{rx1}$ is smaller than the second output power $P_{rx2}$, in detail, there is no specific output voltage value within the range of the first minimum output voltage $V_{rect1\_min\_dyn}$ to the first maximum output voltage $V_{rect1\_max\_dyn}$, which satisfy Equation 9, and there is no specific output voltage within the range of the second minimum output voltage $V_{rect2\_min\_dyn}$ to the second maximum output voltage $V_{rect2\_max\_dyn}$, the first and second optimum output control voltages $V_{rect1\_con\_set}$ and $V_{rect2\_con\_set}$ can be set as follows.

2-1) When first output power $P_{rx1}$ is smaller than the second output power $P_{rx2}$, the first optimum output control voltage $V_{rect1\_con\_set}$ can become a first minimum output voltage $V_{rect1\_min\_dyn}$ and the second optimum output control voltage $V_{rect2\_con\_set}$ can become a second maximum output voltage $V_{rect2\_max\_dyn}$ so that Equation 9 can be approximately satisfied.

2-2) When first output power $P_{rx1}$ is smaller than the second output power $P_{rx2}$, the first optimum output control voltage $V_{rect1\_con\_set}$ can become a first maximum output voltage $V_{rect1\_max\_dyn}$ and the second optimum output control voltage $V_{rect2\_con\_set}$ can become a second minimum output voltage $V_{rect2\_min\_dyn}$ so that Equation 9 can be approximately satisfied.

2-3) The first and second optimum output control voltages $V_{rect1\_con\_set}$ and $V_{rect2\_con\_set}$ are included in the power receiver unit control information (PRU control), and the first and second power receiver units 2001 and 2002 receiving the information can provide a requested voltage obtained by newly setting the first and second optimum output voltages $V_{rect1\_set}$ and $V_{rect2\_set}$ on the basis of the power receiver unit control information (PRU control) and receive power based on the requested voltage from the power transfer unit 1000.

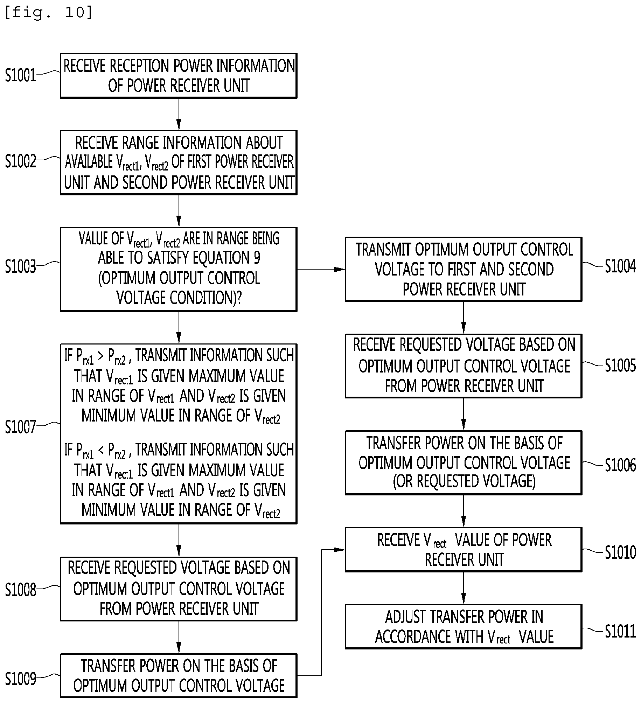

FIG. 10 is a flowchart showing the operation of a power transfer unit corresponding to FIG. 9.
In particular, FIG. 10 is a detailed flowchart for calculating optimum output control voltages of the power receiver units of FIG. 7. Referring to FIG. 10, the power transfer unit 1000 can receive reception power information of the power receiver units 2001 and 2002.
The power transfer unit 1000 can receive range information of a first available output voltage $V_{rect1}$ from the first power receiver unit 2001. The power transfer unit 1000 can also receive range information of a second available output voltage $V_{rect2}$ from the second power receiver unit 2002 (step S1002).
For example, the power transfer unit 1000 can receive a first minimum output voltage $V_{rect1\_min\_dyn}$, a first maximum output voltage $V_{rect1\_max\_dyn}$, and a first optimum output voltage $V_{rect1\_set\_dyn}$ of the first output voltage $V_{rect1}$ of the first power receiver unit 2001. The power transfer unit 1000 can receive a second minimum output voltage $V_{rect2\_min\_dyn}$, a second maximum output voltage $V_{rect2\_max\_dyn}$, and a second optimum output voltage $V_{rect2\_set\_dyn}$ of the second output voltage $V_{rect2}$ of the second power receiver unit 2002. The power transfer unit 1000 can receive the first output power $P_{rx1}$ of the first power receiver unit 2001 and the second output power $P_{rx2}$ of the second power receiver unit 2002. The power transfer unit 1000 can determine the first and second output voltages $P_{rx1}$ and $P_{rx2}$, using output current information of the first reception-side AC/DC converter 2301, output current information of the second reception-side AC/DC converter 2302, and the output voltages $V_{rect1}$ and $V_{rect2}$.
The power transfer unit 1000 can determine whether the values of the first output voltage $V_{rect1}$ and the second output voltage $V_{rect2}$ are in a range that can satisfy Equation 9.
That is, the power transfer unit 1000 can determine whether the values of the first output voltage $V_{rect1}$ and the second output voltage $V_{rect2}$ are in a range that can satisfy an optimum output control voltage condition. In other words, it is possible to check whether a specific voltage value within the range of the first output voltage $V_{rect1}$, a specific voltage value within the range of the second output voltage $V_{rect2}$, and the first and second output power $P_{rx1}$ and $P_{rx2}$ satisfy Equation 9. For example, when the first optimum output voltage $V_{rect1\_set}$ is smaller than the second optimum output voltage $V_{rect2\_set}$ and the first output power $P_{rx1}$ is smaller than the second output power $P_{rx2}$, in detail, when there is a specific output voltage value within the range of the first minimum output voltage $V_{rect1\_min\_dyn}$ to the first maximum output voltage $V_{rect1\_max\_dyn}$ that satisfies Equation 9 and there is a specific output voltage within the range of the second minimum output voltage $V_{rect2\_min\_dyn}$ to the second maximum output voltage $V_{rect2\_max\_dyn}$, the power transfer unit 1000 can transmit the power receiver unit control information (PRU control) including charge permission information to the first and second power receiver units 2001 and 2002.

1-1) The power transfer unit 1000 can transmit information about the first and second optimum output control voltages $V_{rect1\_con\_set}$ and $V_{rect2\_con\_set}$ created on the basis of Equation 9 to the first and second power receiver units 2001 and 2002 together with the power receiver unit control information (PRU control) such that the first and second power receiver units 2001 and 2002 newly set the first and second optimum output voltages $V_{rect1\_set}$ and $V_{rect2\_set}$ that satisfy Equation 9 (step S1004).

The first and second power receiver units 2001 and 2002 can generate and transfer a requested voltage to the power transfer unit 1000 in correspondence to the first and second optimum output control voltages $V_{rect1\_con\_set}$ and $V_{rect2\_con\_set}$ (step S1005).
The requested voltage is an optimum output voltage $V_{rect\_set}$ thereof changed on the basis of first and second optimum output control voltages $V_{rect1\_con\_set}$ and $V_{rect2\_con\_set}$. When Equation 9 is satisfied even if the output voltage $V_{rect}$ of the AC/DC converter of any one of the first and second power receiver units 2001 and 2002, an optimum output control voltage $V_{rect\_con\_set}$ can be set and transferred to the corresponding power receiver unit such that only one output voltage $V_{rect}$ required to be adjusted is adjusted within the range of the minimum and maximum output voltages $V_{rect\_min}$

and $V_{rect\_max}$ to satisfy Equation 9. The power receiver unit receiving the optimum output control voltage can transfer a requested voltage generated on the basis of the optimum output control voltage $V_{rect\_con\_set}$ to the power transfer unit 1000. The requested voltage is an optimum output voltage $V_{rect\_set}$ thereof changed on the basis of the optimum output control voltage $V_{rect\_con\_set}$.

The power transfer unit 1000 can receive a power receiver unit dynamic parameter from the power receiver units 2001 and 2002 as a response signal for the power receiver unit control information (PRU control) and can provide power on the basis of the optimum output voltages $V_{rect\_set}$ of the power receiver units 2001 and 2002 (requested voltages generated on the basis of the optimum output control voltage $V_{rect\_con\_set}$. Alternatively, the power transfer unit 1000 may provide power on the basis of the optimum output control voltage $V_{rect\_con\_set}$ without waiting the response signal for the power receiver unit control information (PRU control) (step S1006).

It is possible to generate and provide first input power $P_{in1}$, which is set on the basis of the first optimum output voltage $V_{rect1\_set}$ and the second optimum output voltage $V_{rect2\_set}$, to the first power receiver unit 2001 and can generate and provide second input power $P_{in2}$ to the second power receiver unit 2002.

When the first optimum output voltage $V_{rect1\_set}$ is smaller than the second optimum output voltage $V_{rect2\_set}$, but first output power $P_{rx1}$ is larger than the second output power $P_{rx2}$, or when the first optimum output voltage $V_{rect1\_set}$ is larger than the second optimum output voltage $V_{rect2\_set}$, but first output power $P_{rx1}$ is smaller than the second output power $P_{rx2}$, in detail, there is no specific output voltage value within the range of the first minimum output voltage $V_{rect1\_min\_dyn}$ to the first maximum output voltage $V_{rect1\_max\_dyn}$, which satisfy Equation 9, and there is no a specific output voltage within the range of the second minimum output voltage $V_{rect2\_min\_dyn}$ to the second maximum output voltage $V_{rect2\_max\_dyn}$, the first and second optimum output control voltages $V_{rect1\_con\_set}$ and $V_{rect2\_con\_set}$ can be set as follows (step S1007).

When first output power $P_{rx1}$ is smaller than the second output power $P_{rx2}$, the first optimum output control voltage $V_{rect1\_con\_set}$ can become a first minimum output voltage $V_{rect1\_min\_dyn}$ and the second optimum output control voltage $V_{rect2\_con\_set}$ can become a second maximum output voltage $V_{rect2\_max\_dyn}$ so that Equation 9 can be approximately satisfied. When first output power $P_{rx1}$ is smaller than the second output power $P_{rx2}$, the first optimum output control voltage $V_{rect1\_con\_set}$ can become a first maximum output voltage $V_{rect1\_max\_dyn}$ and the second optimum output control voltage $V_{rect2\_con\_set}$ can become a second minimum output voltage $V_{rect2\_min\_dyn}$ so that Equation 9 can be approximately satisfied.

The first and second optimum output control voltages $V_{rect1\_con\_set}$ and $V_{rect2\_con\_set}$ are included in the power receiver unit control information (PRU control), and the first and second power receiver units 2001 and 2002 receiving the information can provide a requested voltage obtained by newly setting the first and second optimum output voltages $V_{rect1\_set}$ and $V_{rect2\_set}$ on the basis of the power receiver unit control information (PRU control) (step S1008).

The power transfer unit 1000 can transfer power on the basis of the optimum output control voltage (step S1009). For example, the power transfer unit 1000 can transfer power based on the first optimum output control voltage $V_{rect1\_con\_set}$ to the first power receiver unit 2001. Further, the power transfer unit 1000 can transfer power based on the second optimum output control voltage $V_{rect2\_con\_set}$ to the second power receiver unit 2002.

Thereafter, the power transfer unit 1000 can receive the values of the output voltages $V_{rect}$ of the first power receiver unit 2001 and the second power receiver unit 2002 (step S1010). The power transfer unit 1000 can adjust the transfer power in accordance with the output voltages $V_{rect}$ (step S1011)

- When second power receiver unit enters charge area while first power receiver unit is charged.

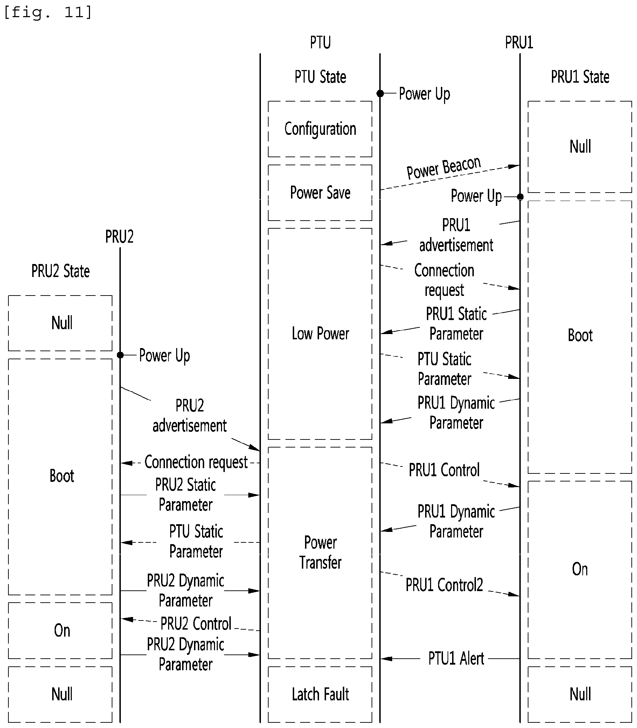

FIG. 11 is a diagram showing the operation flow of a power transfer unit and first and second power receiver units.

A case in which a second power receiver unit enters a charge area when a first power receiver unit is charged is described with reference to FIG. 11.

(1) When power is supplied to the power transfer mode 1000 (Power Up), the configuration mode can be entered. In the power save mode, the power transfer unit 1000 can apply different power beacons to the transfer-side coil 1400 at each period. Using the power beacons, it is possible to detect a change in input impedance $Z_{tx\_in}$ or to drive the power receiver units 2001 and 2002 in a charge area.

(2) In the low power mode, the power transfer unit 1000 receiving a advertisement (PRU advertisement) from the first power receiver unit 2001 can form connection between the power transfer unit 1000 and the first power receiver unit 2001 by transmitting a connection request signal to the first power receiver unit 2001.

(3) The power transfer unit 1000 can receive a power receiver unit static parameter and a power receiver unit dynamic parameter from the first power receiver unit 2001.

(4) In the power transfer mode, the power transfer unit 1000 can transmit first power receiver unit control information (PRU1 control 1) including information for permitting wireless charge to the first power receiver unit 2001. Further, it is possible to allow the first power receiver unit 2001 to wirelessly receive power by creating and supplying input power $P_{in}$, which corresponds to any one of a first optimum output voltage $V_{rect1\_set\_dyn}$ or a first minimum output voltage $V_{rect1\_min\_dyn}$ to a first maximum output voltage $V_{rect1\_max\_dyn}$ of a first output voltage $V_{rect1}$ of the first power receiver unit 2001 receiving the information, to the transfer-side coil unit 1400, on the basis of the first optimum output voltage $V_{rect1\_set\_dyn}$, the first minimum output voltage $V_{rect1\_min\_dyn}$, and the first maximum output voltage $V_{rect1\_max\_dyn}$. Alternatively, after supplying initial power, it is possible to control the current $I_{tx\_coil}$ of the transfer-side coil on the basis of the first minimum output voltage $V_{rect1\_min\_dyn}$, the first maximum output voltage $V_{rect1\_max\_dyn}$, and the first optimum output voltage $V_{rect1\_set\_dyn}$ of the first output voltage $V_{rect1}$.

(5) When the second power receiver unit 2002 enters the charge area while the first power receiver unit 2001 is charged, the power transfer unit 1000 receiving an advertisement signal (PRU advertisement) from the second power receiver unit 2002 can form connection between the power transfer unit 1000 and the second power receiver unit 2002 by transmitting a response signal to the second power receiver unit 2002.

(6) The power transfer unit 1000 can receive a power receiver unit static parameter and a power receiver unit dynamic parameter from the second power receiver unit 2002. Further, it is possible to receive a power receiver unit dynamic parameter from the first power receiver unit 2001. When the power transfer unit 1000 receives at least one of the power receiver unit static parameter and the power receiver unit dynamic parameter from the second power receiver unit 2002, it can receive the power receiver unit dynamic parameter from the first power receiver unit 2001 by transmitting a power receiver unit dynamic parameter request signal to the first power receiver unit 2001. Alternatively, it is possible to wait until the power receiver unit dynamic parameter is transmitted from the first power receiver unit 2001 after receiving the power receiver unit static parameter and the power receiver unit dynamic parameter from the second power receiver unit 2002 (however, it is possible to maintain the wireless power provided to the first power receiver unit 2001).

The power transfer unit 1000, which receives a first minimum output voltage $V_{rect1\_min\_dyn}$, a first maximum output voltage $V_{rect1\_max\_dyn}$, and a first optimum output voltage $V_{rect1\_set\_dyn}$ of the first output voltage $V_{rect1}$ of the first power receiver unit 2001, a second minimum output voltage $V_{rect2\_min\_dyn}$, a second maximum output voltage $V_{rect2\_max\_dyn}$, and a second optimum output voltage $V_{rect2\_set\_dyn}$ of the second output voltage $V_{rect2}$ of the second power receiver unit 2002, and first maximum output power $P_{rx1}$ of the first power receiver unit 2001 and a second output power $P_{rx2}$ of the second power receiver unit 2002 or output current information of the first reception-side AC/DC converter 2301 and output current information of the second reception-side AC/DC converter 2302, can determine first and second output power $P_{rx1}$ and $P_{rx2}$ on the basis of parameters.
Further, it is possible to check whether the range of the first output voltage $V_{rect1}$, the range of the second output voltage $V_{rect2}$, and the first and second output power $P_{rx1}$ and $P_{rx2}$ satisfy Equation 9.

1) For example, when the first optimum output voltage $V_{rect1\_set}$ is smaller than the second optimum output voltage $V_{rect2\_set}$ and the first output power $P_{rx1}$ is smaller than the second output power $P_{rx2}$, in detail, when there is a specific output voltage value within the range of the first minimum output voltage $V_{rect1\_min\_dyn}$ to the first maximum output voltage $V_{rect1\_max\_dyn}$ that satisfies Equation 9 and there is a specific output voltage within the range of the second minimum output voltage $V_{rect2\_min\_dyn}$ to the second maximum output voltage $V_{rect2\_max\_dyn}$, the power transfer unit 1000 can transmit power receiver unit control information (PRU 2 control) of the second power receiver unit 2002 including charge permission information to the second power receiver unit 2002. Further, the power transfer unit 1000 can transmit information about second optimum output control voltage $V_{rect2\_con\_set}$ to the second power receiver unit 2002 together with the second power receiver unit control information (PRU2 control) of the second power receiver unit 2002 such that the second power receiver unit 2002 newly set a second output voltage $V_{rect2}$ that satisfies Equation 9. Further, the power transfer unit 1000 can transmit information about the first optimum output control voltage $V_{rect1\_con\_set}$ to the first power receiver unit 2001 together with the second power receiver unit control information (PRU2 control2) newly updated for the first power receiver unit 2001. The first and second power receiver units 2001 and 2002 can generate and transfer a requested voltage to the power transfer unit 1000 in correspondence to the first and second optimum output control voltages $V_{rect1\_con\_set}$ and $V_{rect2\_con\_set}$. The requested voltage is an optimum output voltage $V_{rect\_set}$ thereof changed on the basis of first and second optimum output control voltages $V_{rect1\_con\_set}$ and $V_{rect2\_con\_set}$.

1-1) When Equation 9 is satisfied even if only any one of the first and second output voltages $V_{rect1}$ and $V_{rect2}$ is adjusted, it is possible to set an optimum output control voltage $V_{rect\_con\_set}$ such that only one output voltage $V_{rect}$,

which is required to be adjusted, of the first and second output voltages $V_{rect1}$ and $V_{rect2}$ is adjusted within the range of the minimum and maximum output voltages $V_{rect\_main}$ and $V_{rect\_max}$, and transmit the optimum output control voltage to the corresponding power receiver unit. The power receiver unit receiving the optimum output control voltage can transfer a requested voltage generated on the basis of the optimum output control voltage $V_{rect\_con\_set}$ to the power transfer unit 1000. The requested voltage is an optimum output voltage $V_{rect\_set}$ thereof changed on the basis of the optimum output control voltage $V_{rect\_con\_set}$.

1-2) The power transfer unit 1000 can generate and provide first input power $P_{in1}$, which is set on the basis of requested power from a power receiver unit, to the first power receiver unit 2001 and can generate and provide second input power $P_{in2}$ to the second power receiver unit 2002.

2) When the first optimum output voltage $V_{rect1\_set}$ is smaller than the second optimum output voltage $V_{rect2\_set}$, but first output power $P_{rx1}$ is larger than the second output power $P_{rx2}$, or when the first optimum output voltage $V_{rect1\_set}$ is larger than the second optimum output voltage $V_{rect2\_set}$, but first output power $P_{rx1}$ is smaller than the second output power $P_{rx2}$, in detail, there is no specific output voltage value $V_{rect1}$ within the range of the first minimum output voltage $V_{rect1\_min\_dyn}$ to the first maximum output voltage $V_{rect1\_max\_dyn}$, which satisfy Equation 9, and there is no specific output voltage $V_{rect2}$ within the range of the second minimum output voltage $V_{rect2\_min\_dyn}$ to the second maximum output voltage $V_{rect2\_max\_dyn}$, the power transfer unit 1000 can set the first and second optimum output control voltages $V_{rect1\_con\_set}$ and $V_{rect2\_con\_set}$ as follows.

2-1) When first output power $P_{rx1}$ is smaller than the second output power $P_{rx2}$, the power transfer unit 1000 can make the first optimum output control voltage $V_{rect1\_con\_set}$ be a first minimum output voltage $V_{rect1\_min\_dyn}$ and the second optimum output control voltage $V_{rect2\_con\_set}$ be a second maximum output voltage $V_{rect2\_max\_dyn}$ so that Equation 9 can be approximately satisfied.

2-2) When first output power $P_{rx1}$ is smaller than the second output power $P_{rx2}$, the power transfer unit 1000 can make the first optimum output control voltage $V_{rect1\_con\_set}$ be a first maximum output voltage $V_{rect1\_max\_dyn}$ and the second optimum output control voltage $V_{rect2\_con\_set}$ be a second minimum output voltage $V_{rect2\_min\_dyn}$ so that Equation 9 can be approximately satisfied.

2-3) The first and second optimum output control voltages $V_{rect1\_con\_set}$ and $V_{rect2\_con\_set}$ are included in the power receiver unit control information (PRU control), and the first and second power receiver units 2001 and 2002 receiving the information can provide a requested voltage obtained by newly setting the first and second output voltages $V_{rect1}$ and $V_{rect2}$ on the basis of the power receiver unit control information (PRU control) and receive power based on the requested voltage from the power transfer unit 1000.

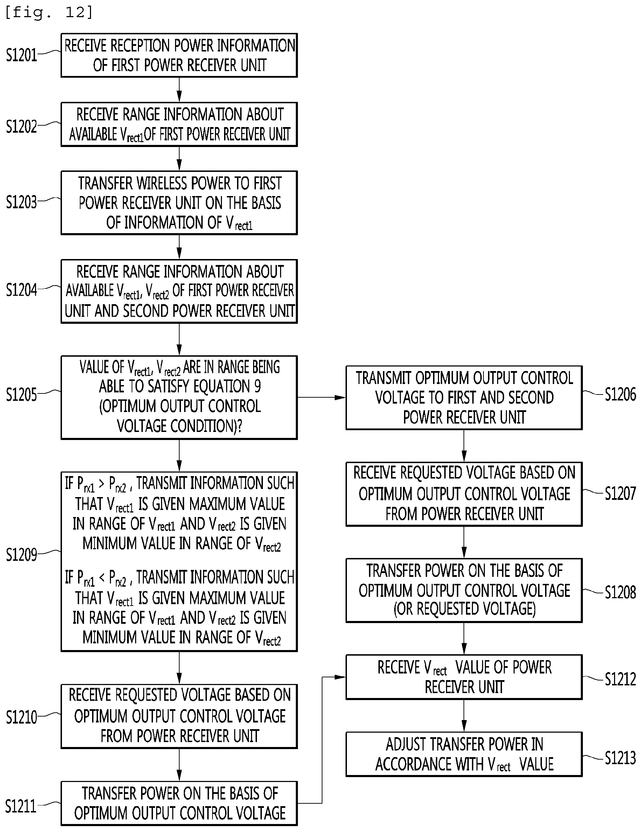

FIG. 12 is a flowchart showing the operation of power transfer unit corresponding to the flowchart of FIG. 11.
Referring to FIG. 12, the power transfer unit 1000 can receive reception power information of the first power receiver unit 2001 from the first power receiver unit 2001 (step S1201). For example, the power transfer unit 1000 can receive a power receiver unit static parameter and a power receiver unit dynamic parameter from the first power receiver unit 2001.
The power transfer unit 1000 can receive range information of an available output voltage $V_{rect}$ of the first power receiver unit 2001 from the first power receiver unit 2001 (step S1202). In the power transfer mode, the power transfer unit 1000 can transmit first power receiver unit control information (PRU1 control 1) including information for permitting wireless charge to the first power receiver unit 2001.
Further, it is possible to allow the first power receiver unit 2001 to wirelessly receive power by creating and supplying input power $P_{in}$, which corresponds to any one of a first optimum output voltage $V_{rect1\_set\_dyn}$ or a first minimum output voltage $V_{rect1\_min\_dyn}$ to a first maximum output voltage $V_{rect1\_max\_dyn}$ of a first output voltage $V_{rect1}$ of the first power receiver unit 2001 receiving the information, to the transfer-side coil unit 1400, on the basis of the first optimum output voltage $V_{rect1\_set\_dyn}$, the first minimum output voltage $V_{rect1\_min\_dyn}$, and the first maximum output voltage $V_{rect1\_max\_dyn}$ (step S1203).
Alternatively, after supplying initial power, it is possible to control the current $I_{tx\_coil}$ of the transfer-side coil on the basis of the first minimum output voltage $V_{rect1\_min\_dyn}$, the first maximum output voltage $V_{rect1\_max\_dyn}$, and the first optimum output voltage $V_{rect1\_set\_dyn}$ of the first output voltage $V_{rect1}$. When the second power receiver unit 2002 enters the charge area while the first power receiver unit 2001 is charged, the power transfer unit 1000 receiving an advertisement signal (PRU advertisement) from the second power receiver unit 2002 can form connection between the power transfer unit 1000 and the second power receiver unit 2002 by transmitting a response signal to the second power receiver unit 2002.

The power transfer unit 1000 can receive a power receiver unit static parameter and a power receiver unit dynamic parameter from the second power receiver unit 2002. Further, it is possible to receive a power receiver unit dynamic parameter from the first power receiver unit 2001 (step S1204).

When the power transfer unit 1000 receives at least one of the power receiver unit static parameter and the power receiver unit dynamic parameter from the second power receiver unit 2002, it can receive the power receiver unit dynamic parameter from the first power receiver unit 2001 by transmitting a power receiver unit dynamic parameter request signal to the first power receiver unit 2001. Alternatively, it is possible to wait until the power receiver unit dynamic parameter is transmitted from the first power receiver unit 2001 after receiving the power receiver unit static parameter and the power receiver unit dynamic parameter from the second power receiver unit 2002 (however, it is possible to maintain the wireless power provided to the first power receiver unit 2001).

The power transfer unit 1000, which receives a first minimum output voltage $V_{rect1\_min\_dyn}$, a first maximum output voltage $V_{rect1\_max\_dyn}$, and a first optimum output voltage $V_{rect1\_set\_dyn}$ of the first output voltage $V_{rect1}$ of the first power receiver unit 2001, a second minimum output voltage $V_{rect2\_min\_dyn}$, a second maximum output voltage $V_{rect2\_max\_dyn}$, and a second optimum output voltage $V_{rect2\_set\_dyn}$ of the second output voltage $V_{rect2}$ of the second power receiver unit 2002, and first maximum output power $P_{rx1}$ of the first power receiver unit 2001 and a second output power $P_{rx2}$ of the second power receiver unit 2002 or output current information of the first reception-side AC/DC converter 2301 and output current information of the second reception-side AC/DC converter 2302, can determine first and second output power $P_{rx1}$ and $P_{rx2}$ on the basis of parameters.

Further, the power transfer unit 1000 can check whether the range of the first output voltage $V_{rect1}$, the range of the second output voltage $V_{rect2}$, and the first and second output power $P_{rx1}$ and $P_{rx2}$ satisfy Equation 9 (step S1205).

For example, when the first optimum output voltage $V_{rect1\_set}$ is smaller than the second optimum output voltage $V_{rect2\_set}$ and the first output power $P_{rx1}$ is smaller than the second output power $P_{rx2}$, in detail, when there is a specific output voltage value within the range of the first minimum output voltage $V_{rect1\_min\_dyn}$ to the first maximum output voltage $V_{rect1\_max\_dyn}$ that satisfies Equation 9 and there is a specific output voltage within the range of the second minimum output voltage $V_{rect2\_min\_dyn}$ to the second maximum output voltage $V_{rect2\_max\_dyn}$, the power transfer unit 1000 can transmit power receiver unit control information (PRU 2 control) of the second power receiver unit 2002 including charge permission information to the second power receiver unit 2002. Further, the power transfer unit 1000 can transmit information about second optimum output control voltage $V_{rect2\_con\_set}$ to the second power receiver unit 2002 together with the second power receiver unit control information (PRU2 control) of the second power receiver unit 2002 such that the second power receiver unit 2002 newly set a second output voltage $V_{rect2}$ that satisfies Equation 9 (step S1206).

Further, the power transfer unit 1000 can transmit information about the first optimum output control voltage $V_{rect1\_con\_set}$ to the first power receiver unit 2001 together with the second power receiver unit control information (PRU2 control2) newly updated for the first power receiver unit 2001.

The first and second power receiver units 2001 and 2002 can generate and transfer a requested voltage to the power transfer unit 1000 in correspondence to the first and second optimum output control voltages $V_{rect1\_con\_set}$ and $V_{rect2\_con\_set}$ (step S1207). The requested voltage is an optimum output voltage $V_{rect\_set}$ thereof changed on the basis of first and second optimum output control voltages $V_{rect1\_con\_set}$ and $V_{rect2\_con\_set}$.

Alternatively, when Equation 9 is satisfied even if only any one of the first and second output voltages $V_{rect1}$ and $V_{rect2}$ is adjusted, it is possible to set an optimum output control voltage $V_{rect\_con\_set}$ such that only one output voltage $V_{rect}$, which is required to be adjusted, of the first and second output voltages $V_{rect1}$ and $V_{rect2}$ is adjusted within the range of the minimum and maximum output voltages $V_{rect\_main}$ and $V_{rect\_max}$, and transmit the optimum output control voltage to the corresponding power receiver unit. The power receiver unit receiving the optimum output control voltage can transfer a requested voltage generated on the basis of the optimum output control voltage $V_{rect\_con\_set}$ to the power transfer unit 1000. The requested voltage is an optimum output voltage $V_{rect\_set}$ thereof changed on the basis of the optimum output control voltage $V_{rect\_con\_set}$.

The power transfer unit 1000 can generate and provide first input power $P_{in1}$, which is set on the basis of requested power from a power receiver unit, to the first power receiver unit 2001 and can generate and provide second input power $P_{in2}$ to the second power receiver unit 2002 (step S1208).

When the first optimum output voltage $V_{rect1\_set}$ is smaller than the second optimum output voltage $V_{rect2\_set}$, but first output power $P_{rx1}$ is larger than the second output power $P_{rx2}$, or when the first optimum output voltage $V_{rect1\_set}$ is larger than the second optimum output voltage $V_{rect2\_set}$, but first output power $P_{rx1}$ is smaller than the second output power $P_{rx2}$, in detail, there is no specific output voltage value $V_{rect1}$ within the range of the first minimum output voltage $V_{rect1\_min\_dyn}$ to the first maximum output voltage $V_{rect1\_max\_dyn}$, which satisfy Equation 9, and there is no specific output voltage $V_{rect2}$ within the range of the second minimum output voltage $V_{rect2\_min\_dyn}$ to the second maximum output voltage $V_{rect2\_max\_dyn}$, the power transfer unit 1000 can set the first and second optimum output control voltages $V_{rect1\_con\_set}$ and $V_{rect2\_con\_set}$ as follows (steps S1209).

When first output power $P_{rx1}$ is smaller than the second output power $P_{rx2}$, the power transfer unit 1000 can make the first optimum output control voltage $V_{rect1\_con\_set}$ be a first minimum output voltage $V_{rect1\_min\_dyn}$ and the second optimum output control voltage $V_{rect2\_con\_set}$ be a second maximum output voltage $V_{rect2\_max\_dyn}$ so that Equation 9 can be approximately satisfied.

When first output power $P_{rx1}$ is smaller than the second output power $P_{rx2}$, the power transfer unit 1000 can make the first optimum output control voltage $V_{rect1\_con\_set}$ be a first maximum output voltage $V_{rect1\_max\_dyn}$ and the second optimum output control voltage $V_{rect2\_con\_set}$ be a second minimum output voltage $V_{rect2\_min\_dyn}$ so that Equation 9 can be approximately satisfied.

The power transfer unit 1000 can receive a requested voltage based on the optimum output control voltages from the power receiver units.

For example, the first and second optimum output control voltages $V_{rect1\_con\_set}$ and $V_{rect2\_con\_set}$ are included in the power receiver unit control information (PRU control), and the first and second power receiver units 2001 and 2002 receiving the information can provide a requested voltage obtained by newly setting the first and second output voltages $V_{rect1}$ and $V_{rect2}$ on the basis of the power receiver unit control information (PRU control).

The power transfer unit 1000 can transfer power on the basis of the optimum output control voltage (step S1211). For example, the power transfer unit 1000 can transfer power based on the first optimum output control voltage $V_{rect1\_con\_set}$ to the first power receiver unit 2001. Further, the power transfer unit 1000 can transfer power based on the second optimum output control voltage $V_{rect2\_con\_set}$ to the second power receiver unit 2002.

Thereafter, the power transfer unit 1000 can receive the values of the output voltages $V_{rect}$ of the first power receiver unit 2001 and the second power receiver unit 2002 (step S1212). The power transfer unit 1000 can adjust the transfer power in accordance with the output voltages $V_{rect}$ (step S1213).

Information exchange between the power transfer unit 1000 and the power receiver unit 2000 and control based on the information exchange described above can be performed by the transfer-side communication & control unit 1500 and the reception-side communication & control unit 2600.

According to the multi-charge method of an embodiment, when charge power is adjusted at all times on the basis of power receiver unit dynamic parameters from a plurality of power receiver units (for example, power receiver units A and B), charge power suitable for the state of the power receiver unit A is provided on the basis of the parameters of the power receiver unit A, so the charge efficiency of the power receiver unit B is reduced. Thereafter, charge power suitable for the state of the power receiver unit B is provided on the basis of the parameters of the power receiver unit B, so the charge efficiency of the power receiver unit A is reduced. Therefore, instability of the system can be removed.

According to the multi-charge method of an embodiment, since wireless charge is performed in consideration of charge efficiency that is the most suitable for the entire system when a plurality of power receiver units is simultaneously charged, it is possible to secure efficiency and stability in multi-charge.

Further, it is possible to secure stability in multi-charge by readjusting the output voltages of the reception-side AC/DC converters of a plurality of power receiver units according to an embodiment.

Although exemplary embodiments of the present invention were described above, it should be understood that the present invention may be changed and modified in various ways by those skilled in the art without departing from the spirit and scope of the present invention described in the following claims. Therefore, the technical scope of the present invention is not limited to the exemplary embodiments described herein, but should be determined by claims.

**INDUSTRIAL APPLICABILITY**

The present invention can be used in the field of a wireless power transfer system.

**Claims**

1. A method of driving a power transfer unit transferring wireless charge power to a plurality of power receiver units, wherein the power transfer unit receives a parameter including information about output voltages of AC/DC converters of the power receiver units and output power of the power receiver units and creates power receiver unit control information including an optimum output control voltage on the basis of the parameter, and
the power receiver unit control information is transmitted to at least one of the power receiver units, and the power receiver unit receiving the power receiver unit control information receives information about a requested voltage generated on the basis of the optimum output control voltage and generates wireless power on the basis of the information about the requested voltage.

2. The method of claim 1, wherein information about the parameter and the requested voltage includes information about at least one of a maximum output voltage that is a maximum value, a minimum output voltage that is a minimum value, and an optimum output voltage that is an optimum value of the output voltage.

3. The method of claim 1, wherein the power receiver unit control information further includes information for enabling/disabling and permitting charge.

4. The method of claim 2, wherein the power receiver units include first and second power receiver units, and the power transfer unit generates first and second optimum output control voltages for the first and second power receiver units on the basis of first output power and a first output voltage of a first AC/DC converter of the first power receiver unit and second output power and a second output voltage of a second AC/DC converter of the second power receiver unit.

5. The method of claim 4, wherein the power transfer unit determines whether the relationship between the first and second output power and the first and second output voltages satisfies the following equation 1,

Equation 1

$$V_{rect2} = V_{rect1}{}^2 \frac{P_{rx2}}{P_{rx1}}$$

where $P_{rx1}$ is the first output power, $P_{rx2}$ is the second output power, $V_{rect1}$ is the first output voltage, and $V_{rect2}$ is the second output voltage.

6. The method of claim 5, wherein a first output control voltage satisfying the equation 1 is set within a range between a maximum value and a minimum value of the first output voltage and first power receiver unit control information including information about the first output control voltage to the first power receiver unit, and a first requested voltage generated on the basis of the first power receiver unit control information by the first power receiver unit and wireless power is generated on the basis of the first requested voltage.

7. The method of claim 5, wherein a second output control voltage satisfying the equation 1 is set within a range between a maximum value and a minimum value of the second output voltage and second power receiver unit control information including information about the second output control voltage to the second power receiver unit, and a second requested voltage generated on the basis of the second power receiver unit control information by the second power receiver unit and wireless power is generated on the basis of the second requested voltage.

8. The method of claim 5, wherein when there is no first output control voltage satisfying the equation 1 within a range between the maximum value and the minimum value of the first output voltage or when there is no second output control voltage satisfying the equation 1 within the maximum value and the minimum value of the second output voltage,

the first output control voltage is set as any one of the maximum value and the minimum value of the first output voltage, and
the second output control voltage is set as any one of the maximum value and the minimum value of the second output voltage.

9. The method of claim 8, wherein when the first output power is larger than the second output power, the first output control voltage is set as the maximum value of the first output voltage and the second output control voltage is set as the minimum value of the second output voltage.

10. The method of claim 8, wherein when the first output voltage is smaller than the second output voltage, the first output control voltage is set as the minimum value of the first output voltage and the second output control voltage is set as the maximum value of the second output voltage.

11. A wireless power transfer method of a wireless power transfer unit transferring wireless power to a plurality of wireless power receiver units, the method comprising:

receiving first reception power information of the power receiver units;

determining an optimum output control voltage of the power receiver units; and
transmitting power adjusted on the basis of the optimum output control voltage to the power receiver units.

12. The method of claim 11, further comprising:

transmitting power receiver unit control information of the power receiver units to the power receiver units;
receiving second reception power information from the power receiver units; and
transmitting power adjusted on the basis of the second reception power information to the power receiver units.

13. The method of claim 12, wherein the reception power information includes information about at least one of output voltages of AC/DC converters of the power receiver units, a maximum output voltage that is a maximum value, a minimum output voltage that is a minimum value, and an optimum output voltage that is an optimum value of the output voltage.

14. The method of claim 13, wherein the power receiver unit control information includes the optimum output control voltage, and
the second reception power information is determined on the basis of the optimum output control voltage.

15. The method of claim 1, wherein the power receiver unit control information includes at least one of items of information for enabling/disabling and permitting charge.

16. The method of claim 13, wherein the optimum output control voltages of the power receiver units are determined using output voltage values of the AC/DC converters of the power receiver units.

17. The method of claim 16, wherein the optimum output control voltages of the power receiver units include the first output voltage $V_{rect1}$ or the second output voltage $V_{rect2}$ that satisfies the following equation 1,

Equation 1

$$V_{rect2} = V_{rect1}{}^2 \frac{P_{rx2}}{P_{rx1}}$$

where $P_{rx1}$ and $P_{rx2}$ are output power values of the AC/DC converters of the power receiver units.

18. The method of claim 17, wherein when the optimum output control voltages of the power receiver units are not included in a range between a maximum output voltage and a minimum output voltage included in the first reception power information of the power receiver units, the optimum output control voltages of the power receiver units are determined as the maximum output voltage or the minimum output voltage.

19. A wireless power reception method of a wireless power receiver unit receiving wireless power from a wireless power transfer unit, the method comprising:

transmitting first reception power information to the power transfer unit;
receiving power receiver unit control information from the power transfer unit;
determining second reception power information on the basis of the power receiver unit control information;
transmitting the second reception power information to the power transfer unit; and
receiving wireless power adjusted on the basis of the second reception power information from the power transfer unit.

20. The method of claim 19, wherein the reception power information includes information about at least one of output voltages of AC/DC converters of the power receiver units, and a maximum output voltage that is a maximum value, a minimum output voltage that is a minimum value, and an optimum output voltage that is an optimum value of the output voltage.

21. The method of claim 19, wherein the power receiver unit control information includes the optimum output control voltage, and
the second reception power information is determined on the basis of the optimum output control voltage.

22. The method of claim 19, wherein the first power receiver unit control information includes at least one of items of information for enabling/disabling and permitting charge.

23. The method of claim 21, wherein the power transfer unit provides wireless power to a separate power receiver unit that is discriminated from the power receiver unit, and an optimum output control voltage of the power receiver unit is determined, using an output voltage value of an AC/DC converter of the power receiver unit and an output voltage value of an AC/DC converter of the separate power receiver unit.

24. The method of claim 23, wherein optimum output control voltages of the power receiver unit and the separate power receiver unit include the first output voltage $V_{rect1}$ or the second output voltage $V_{rect2}$ that satisfies the following equation 1,

Equation 1

$$V_{rect2} = V_{rect1}{}^2 \frac{P_{rx2}}{P_{rx1}}$$

where $P_{rx1}$ and $P_{rx2}$ are output power values of the AC/DC converters of the power receiver unit and the separate power receiver units.

25. The method of claim 24, wherein the optimum output control voltages of the power receiver unit and the separate power receiver unit are not included in range between a maximum output voltage and a minimum output voltage included in the first reception power information of the power receiver unit and the separate power receiver unit, the optimum output control voltages of the power receiver unit and the separate power receiver unit are set as the maximum output voltage or the minimum output voltage.

26. A method of driving a first power receiver unit of first and second power receiver units receiving wireless charge power from a power transfer unit, wherein the first power receiver unit
transmits a parameter including information about a first output voltage and first output power of a first AC/DC converter thereof to the power transfer unit,
receives power receiver unit control information including a first optimum output control voltage generated on the basis of the parameter from the power transfer unit, and
creates and transmits a requested voltage on the basis of the first optimum output control voltage to the power transfer unit.

27. The method of claim 26, wherein information about the parameter and the requested voltage includes information about at least one of a first maximum output voltage that is a maximum value, a first minimum output voltage that is a minimum value, and a first optimum output voltage that is an optimum value of the first output voltage.

28. The method of claim 26, wherein the power receiver unit control information further includes information for enabling/disabling and permitting charge.

29. The method of claim 27, wherein the power transfer unit generates first and second optimum output control voltages for the first and second power receiver units on the basis of first output power and a first output voltage of a first AC/DC converter of the first power receiver unit and second output power and a second output voltage of a second AC/DC converter of the second power receiver unit.

30. The method of claim 29, wherein the power transfer unit determines whether the relationship between the first and second output power and the first and second output voltages satisfies the following equation 1,

Equation 1

$$V_{rect2} = V_{rect1}{}^2 \frac{P_{rx2}}{P_{rx1}}$$

where $P_{rx1}$ is the first output power, $P_{rx2}$ is the second output power, $V_{rect1}$ is the first output voltage, and $V_{rect2}$ is the second output voltage.

31. The method of claim 30, wherein a first output control voltage satisfying the equation 1 is set within a range between the maximum value and the minimum value of he first output voltage, and
power receiver unit control information including information about the first output control voltage is received and a first requested voltage is generated on the basis of the power receiver unit control information.

32. The method of claim 29, wherein when there is no first output control voltage satisfying the equation 1 within a range between the maximum value and the minimum value of the first output voltage or when there is no second output control voltage satisfying the equation 1 within the maximum value and the minimum value of the second output voltage,
the first output control voltage is set as any one of the maximum value and the minimum value of the first output voltage.

33. The method of claim 29, wherein when the first output power is larger than the second output power, the first output control voltage is set as the maximum value of the first output voltage, and
when the first output power is smaller than the second output power, the first output control voltage is set as the minimum value of the first output voltage.

34. A power transfer unit comprising:

a transfer-side resonant circuit resonantly coupled to reception-side resonant circuits of a plurality of power receiver units;
a power converter generating and outputting AC power to the transfer-side resonant circuit; and
a controller controlling the power converters,
wherein the power transfer unit generates and transfers the an optimum rectified control voltage on the basis of minimum and maximum values of rectified voltages of the power receiver units, and generates wireless power on the basis of requested voltages of the power receiver units generated on the basis of the optimum rectified control voltage.

35. The power transfer unit of claim 34, wherein the power transfer unit receives first output power of a first power receiver unit that is any one of the power receiver units and second output power of a second power receiver that is another one of the power receiver units and then sets the optimum rectified control voltage on the basis of the first and second output power.

36. The power transfer unit of claim 35, wherein when the first output power is smaller than the second output power, the optimum rectified control voltage is generated such that a requested voltage of the first power receiver unit is smaller than a requested voltage of the second power receiver unit.

37. The power transfer unit of claim 35, wherein when the first output power is smaller than the second output power and the optimum rectified control voltage, which is generated such that a requested voltage of the first power receiver unit is smaller than a requested voltage of the second power receiver unit, cannot be set within a range between a minimum value and a maximum value of the rectified voltage, the rectified control voltage is set such that the requested voltage of the first power receiver unit becomes a minimum value of a rectified voltage of the first power receiver unit and the requested voltage of the second power receiver unit becomes a maximum value of a rectified voltage of the second power receiver unit.

38. The power transfer unit of claim 34, wherein information of the rectified control voltage is transmitted to the power receiver units together with power receiver control information enabling or disabling a charge function of the power receiver units.

**39.** A power receiver unit comprising:

a reception-side resonant circuit resonantly coupled to a transfer-side resonant circuit of a power transfer unit;
a rectifier rectifying an AC current from the reception-side resonant circuit; and
a controller controlling a rectified voltage of the rectifier,
wherein the power receiver unit transmits information about the rectified voltage to the power transfer unit, receives a rectified control voltage generated on the basis of the information about the rectified voltage from the power transfer unit, and generates and transmits a requested voltage to the power transfer unit on the basis of the rectified control voltage.

**40.** The power receiver unit of claim 39, wherein the rectified control voltage is a voltage value of any one of a minimum value to a maximum value of the rectified voltage.

**41.** The power receiver unit of claim 39, wherein wireless power generated on the basis of the requested voltage is received.

**42.** The power receiver unit of claim 39, wherein information of the rectified control voltage is transmitted to the power receiver unit together with power receiver control information enabling or disabling a charge function of the power receiver unit.

[fig. 1]

[fig. 2]

[fig. 3A]

1000

101    102                                              2000

103

[fig. 3B]

[fig. 4A]

2000

1000    201    202    2500

203

[fig. 4B]

2500

2400

2300

2200

2120

2100

2600

2620

2610

1000

2000

[fig. 5]

PTU                                    PRU

PTU State                              PRU State

Power Up

| Configuration |                    | Null |

Power Beacon

Power Up

| Power Save |

PRU
advertisement

| Low Power |

Connection
request

PRU Static
Parameter

PTU Static
Parameter

| Boot |

PRU Dynamic
Parameter

PRU Control

| Power
Transfer |

PTU Dynamic
Parameter

| On |

PTU Alert

| Latch Fault |                      | Null |

[fig. 6A]

1000

1200

1300    1400

2001

2101    2201    2301    $V_{rect1}$    $P_{rx1}$

$Z_{a1}$    2401

$R_{L1}$

2501

2002

2102    2202    2302    $V_{rect2}$    $P_{rx2}$

$Z_{a2}$    2402

$R_{L2}$

2502

[fig. 6B]

[fig. 7]

| | |
|---|---|
| RECEIVE RECEPTION POWER INFORMATION FROM PLURALITY OF POWER RECEIVER UNITS | S110 |

↓

| | |
|---|---|
| CALCULATE OPTIMUM OUTPUT CONTROL VOLTAGE OF PLURALITY OF POWER RECEIVER UNITS | S130 |

↓

| | |
|---|---|
| TRANSMIT OPTIMUM OUTPUT CONTROL VOLTAGE TO POWER RECEIVER UNITS | S150 |

↓

| | |
|---|---|
| RECEIVE REQUESTED VOLTAGE BASED ON OPTIMUM OUTPUT CONTROL VOLTAGE FROM POWER RECEIVER UNITS | S170 |

↓

| | |
|---|---|
| TRANSMIT POWER ON THE BASIS OF OPTIMUM OUTPUT CONTROL VOLTAGE (OR REQUESTED VOLTAGE) | S190 |

[fig. 8]

| | |
|---|---|
| TRANSMIT RECEPTION POWER INFORMATION TO POWER TRANSFER UNIT | S210 |

↓

| | |
|---|---|
| RECEIVE OPTIMUM OUTPUT CONTROL VOLTAGE FROM POWER TRANSFER UNIT | S230 |

↓

| | |
|---|---|
| CHANGE REQUESTED VOLTAGE INFORMATION BASED ON OPTIMUM OUTPUT CONTROL VOLTAGE | S250 |

↓

| | |
|---|---|
| TRANSMIT CHANGED REQUESTED VOLTAGE TO POWER TRANSFER UNIT | S270 |

↓

| | |
|---|---|
| RECEIVE POWER ON THE BASIS OF CHANGED REQUESTED VOLTAGE | S290 |

[fig. 9]

[fig. 10]

S1001 — RECEIVE RECEPTION POWER INFORMATION OF POWER RECEIVER UNIT

S1002 — RECEIVE RANGE INFORMATION ABOUT AVAILABLE $V_{rect1}$, $V_{rect2}$ OF FIRST POWER RECEIVER UNIT AND SECOND POWER RECEIVER UNIT

S1003 — VALUE OF $V_{rect1}$, $V_{rect2}$ ARE IN RANGE BEING ABLE TO SATISFY EQUATION 9 (OPTIMUM OUTPUT CONTROL VOLTAGE CONDITION)?

S1004 — TRANSMIT OPTIMUM OUTPUT CONTROL VOLTAGE TO FIRST AND SECOND POWER RECEIVER UNIT

S1005 — RECEIVE REQUESTED VOLTAGE BASED ON OPTIMUM OUTPUT CONTROL VOLTAGE FROM POWER RECEIVER UNIT

S1006 — TRANSFER POWER ON THE BASIS OF OPTIMUM OUTPUT CONTROL VOLTAGE (OR REQUESTED VOLTAGE)

S1007 — IF $P_{rx1} > P_{rx2}$, TRANSMIT INFORMATION SUCH THAT $V_{rect1}$ IS GIVEN MAXIMUM VALUE IN RANGE OF $V_{rect1}$ AND $V_{rect2}$ IS GIVEN MINIMUM VALUE IN RANGE OF $V_{rect2}$

IF $P_{rx1} < P_{rx2}$, TRANSMIT INFORMATION SUCH THAT $V_{rect1}$ IS GIVEN MAXIMUM VALUE IN RANGE OF $V_{rect1}$ AND $V_{rect2}$ IS GIVEN MINIMUM VALUE IN RANGE OF $V_{rect2}$

S1008 — RECEIVE REQUESTED VOLTAGE BASED ON OPTIMUM OUTPUT CONTROL VOLTAGE FROM POWER RECEIVER UNIT

S1009 — TRANSFER POWER ON THE BASIS OF OPTIMUM OUTPUT CONTROL VOLTAGE

S1010 — RECEIVE $V_{rect}$ VALUE OF POWER RECEIVER UNIT

S1011 — ADJUST TRANSFER POWER IN ACCORDANCE WITH $V_{rect}$ VALUE

[fig. 11]

[fig. 12]

S1201 — RECEIVE RECEPTION POWER INFORMATION OF FIRST POWER RECEIVER UNIT

S1202 — RECEIVE RANGE INFORMATION ABOUT AVAILABLE $V_{rect1}$ OF FIRST POWER RECEIVER UNIT

S1203 — TRANSFER WIRELESS POWER TO FIRST POWER RECEIVER UNIT ON THE BASIS OF INFORMATION OF $V_{rect1}$

S1204 — RECEIVE RANGE INFORMATION ABOUT AVAILABLE $V_{rect1}$, $V_{rect2}$ OF FIRST POWER RECEIVER UNIT AND SECOND POWER RECEIVER UNIT

S1205 — VALUE OF $V_{rect1}$, $V_{rect2}$ ARE IN RANGE BEING ABLE TO SATISFY EQUATION 9 (OPTIMUM OUTPUT CONTROL VOLTAGE CONDITION)?

S1206 — TRANSMIT OPTIMUM OUTPUT CONTROL VOLTAGE TO FIRST AND SECOND POWER RECEIVER UNIT

S1207 — RECEIVE REQUESTED VOLTAGE BASED ON OPTIMUM OUTPUT CONTROL VOLTAGE FROM POWER RECEIVER UNIT

S1208 — TRANSFER POWER ON THE BASIS OF OPTIMUM OUTPUT CONTROL VOLTAGE (OR REQUESTED VOLTAGE)

S1209 — IF $P_{rx1} > P_{rx2}$, TRANSMIT INFORMATION SUCH THAT $V_{rect1}$ IS GIVEN MAXIMUM VALUE IN RANGE OF $V_{rect1}$ AND $V_{rect2}$ IS GIVEN MINIMUM VALUE IN RANGE OF $V_{rect2}$

IF $P_{rx1} < P_{rx2}$, TRANSMIT INFORMATION SUCH THAT $V_{rect1}$ IS GIVEN MAXIMUM VALUE IN RANGE OF $V_{rect1}$ AND $V_{rect2}$ IS GIVEN MINIMUM VALUE IN RANGE OF $V_{rect2}$

S1210 — RECEIVE REQUESTED VOLTAGE BASED ON OPTIMUM OUTPUT CONTROL VOLTAGE FROM POWER RECEIVER UNIT

S1211 — TRANSFER POWER ON THE BASIS OF OPTIMUM OUTPUT CONTROL VOLTAGE

S1212 — RECEIVE $V_{rect}$ VALUE OF POWER RECEIVER UNIT

S1213 — ADJUST TRANSFER POWER IN ACCORDANCE WITH $V_{rect}$ VALUE

## INTERNATIONAL SEARCH REPORT

| International application No. |
| --- |
| **PCT/KR2016/008443** |

| A. | CLASSIFICATION OF SUBJECT MATTER |
| --- | --- |

*H02J 7/02(2006.01)i, H02J 7/04(2006.01)i*

According to International Patent Classification (IPC) or to both national classification and IPC

| B. | FIELDS SEARCHED |
| --- | --- |

Minimum documentation searched (classification system followed by classification symbols)
H02J 7/02; H02J 17/00; H02J 7/00; H04B 5/02; H02J 7/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: wireless power transmission, transmission, reception, control, information

| C. | DOCUMENTS CONSIDERED TO BE RELEVANT | |
| --- | --- | --- |
| Category* | Citation of document, with indication, where appropriate, of the relevant passages | Relevant to claim No. |
| X | KR 10-2013-0135521 A (ELECTRONICS AND TELECOMMUNICATIONS RESEARCH INSTITUTE) 11 December 2013<br>See paragraphs [0060]-[0061], [0078]-[0092], [0104]-[0108] and figures 6-8. | 11-15,19-22 |
| Y | | 1-4,16,23,26-29<br>,33-42 |
| A | | 5-10,17-18,24-25<br>,30-32 |
| Y | KR 10-2015-0028133 A (LG INNOTEK CO., LTD.) 13 March 2015<br>See paragraphs [0011]-[0037], [0088]-[0093], [0116]-[0139] and figure 5. | 1-4,16,23,26-29<br>,33-42 |
| A | KR 10-2015-0017807 A (SAMSUNG ELECTRONICS CO., LTD.) 23 February 2015<br>See claim 1 and figure 8. | 1-42 |
| A | KR 10-2013-0064840 A (KOREA ELECTRONICS TECHNOLOGY INSTITUTE) 19 June 2013<br>See claim 1 and figure 4. | 1-42 |
| A | KR 10-2013-0051970 A (LG INNOTEK CO., LTD.) 21 May 2013<br>See claim 1 and figure 6. | 1-42 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 NOVEMBER 2016 (25.11.2016) | **25 NOVEMBER 2016 (25.11.2016)** |

| Name and mailing address of the ISA/KR<br>Korean Intellectual Property Office<br>Government Complex-Daejeon, 189 Seonsa-ro, Daejeon 302-701,<br>Republic of Korea | Authorized officer |
| --- | --- |
| Facsimile No. 82-42-472-7140 | Telephone No. |

Form PCT/ISA/210 (second sheet) (January 2015)

**INTERNATIONAL SEARCH REPORT**
Information on patent family members

International application No.

**PCT/KR2016/008443**

| Patent document cited in search report | Publication date | Patent family member | Publication date |
|---|---|---|---|
| KR 10-2013-0135521 A | 11/12/2013 | US 2013-0320760 A1 | 05/12/2013 |
| KR 10-2015-0028133 A | 13/03/2015 | NONE | |
| KR 10-2015-0017807 A | 23/02/2015 | US 2015-0042169 A1 | 12/02/2015 |
| KR 10-2013-0064840 A | 19/06/2013 | KR 10-1350309 B1 | 10/01/2014 |
| KR 10-2013-0051970 A | 21/05/2013 | CN 103107605 A | 15/05/2013 |
| | | CN 103107605 B | 21/01/2015 |
| | | CN 104600869 A | 06/05/2015 |
| | | EP 2592762 A1 | 15/05/2013 |
| | | EP 2849353 A1 | 18/03/2015 |
| | | JP 2013-106515 A | 30/05/2013 |
| | | KR 10-1338732 B1 | 06/12/2013 |
| | | KR 10-1601909 B1 | 11/03/2016 |
| | | KR 10-2016-0024371 A | 04/03/2016 |
| | | KR 10-2016-0030907 A | 21/03/2016 |
| | | US 2013-0119778 A1 | 16/05/2013 |
| | | US 2014-0319925 A1 | 30/10/2014 |
| | | US 2014-0319926 A1 | 30/10/2014 |
| | | US 2015-0155718 A1 | 04/06/2015 |
| | | US 2016-0141891 A1 | 19/05/2016 |
| | | US 2016-0197495 A1 | 07/07/2016 |
| | | US 9124309 B2 | 01/09/2015 |
| | | US 9197070 B2 | 24/11/2015 |
| | | US 9225177 B2 | 29/12/2015 |

Form PCT/ISA/210 (patent family annex) (January 2015)